(19) Europäisches Patentamt — European Patent Office — Office européen des brevets

(11) **EP 3 465 270 B1**

(12) **EUROPEAN PATENT SPECIFICATION**

(45) Date of publication and mention of the grant of the patent:
**25.11.2020 Bulletin 2020/48**

(51) Int Cl.:
*G01S 17/42* [(2006.01)]    *G01S 7/00* [(2006.01)]
*G01S 7/481* [(2006.01)]    *G01S 7/497* [(2006.01)]

(21) Application number: **16753714.1**

(22) Date of filing: **03.06.2016**

(86) International application number:
**PCT/IT2016/000144**

(87) International publication number:
**WO 2017/208270 (07.12.2017 Gazette 2017/49)**

(54) **COMPACT OPTICAL APPARATUS FOR LASER RADAR SENSORS IN HOSTILE ENVIRONMENTS**

KOMPAKTE OPTISCHE VORRICHTUNG FÜR LASERRADARSENSOREN IN AGGRESSIVEN UMGEBUNGEN

APPAREIL OPTIQUE COMPACT POUR CAPTEURS DE RADAR LASER DANS DES ENVIRONNEMENTS HOSTILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.04.2019 Bulletin 2019/15**

(73) Proprietor: **ENEA - Agenzia Nazionale per le Nuove Tecnologie, l'Energia e lo Sviluppo Economico Sostenibile 00196 Roma (RM) (IT)**

(72) Inventors:
• **FERRI DE COLLIBUS, Mario**
  **00196 Roma (IT)**
• **NERI, Carlo**
  **00196 Roma (IT)**
• **ROSSI, Paolo**
  **00196 Roma (IT)**
• **MUGNAINI, Giampiero**
  **00196 Roma (IT)**
• **POLLASTRONE, Fabio**
  **00196 Roma (IT)**
• **MONTI, Chiara**
  **00196 Roma (IT)**
• **FORNETTI, Giorgio**
  **00196 Roma (IT)**
• **FRANCUCCI, Massino**
  **00196 Roma (IT)**
• **GUARNERI, Massimiliano**
  **00196 Roma (IT)**
• **NUVOLI, Marcello**
  **00196 Roma (IT)**

(74) Representative: **Tiburzi, Andrea et al Barzanò & Zanardo Roma S.p.A. Via Piemonte 26 00187 Roma (IT)**

(56) References cited:
**EP-A1- 2 620 745      EP-A2- 1 480 009**
**WO-A1-2014/056476      JP-A- 2010 148 047**

**Description**

The present invention relates to a compact scanning optical apparatus for laser radar systems, the apparatus being driven by low power "hard rad" engines (resistant to radiation) for applications in hostile environments (presence of high temperature, vacuum, magnetic field, gamma radiation and neutron fluxes, chemical agents etc.).

More specifically, the invention relates to an optical system constituted by mirrors and rotating motorized bases that allows to perform scans of the laser beams in incoherent laser radar devices (in amplitude modulation (AM), and pulsed frequency modulation) or even consistent.

The problem of optical scanning systems for hostile environments has been discussed also in a previous patent of the Applicant (RM2013A000462, entitled "Optical Device for eliminating the undesired light and the optical system using said device"). The prism, which in that case was the scanning system, is usually used especially when there are problems of limitation of access areas; in fact, it is a compact optical device which also ensures the laser beam propagation in the front position and allows near-360 degrees scanning angles.

The main disadvantage in the use of the prism is given by the fact that the faces corresponding to the cathetus of the prism (for example isosceles rectangle) may be due to unwanted reflections (stray light). For this reason, the faces corresponding to said cathetus are normally equipped with an anti-reflection coating.

The face corresponding to the hypotenuse of the prism is equipped with a total reflection coating so that said face totally reflects the light beam impinging on it.

Such coatings, both the one applied on the catheti and the one applied on the hypotenuse, can be damaged over time, especially within fusion machines, where they undergo the effects due to a gamma irradiation, at a high neutron flux, as well as to the powders deposited on the prism itself.

These effects reduce the efficiency of the coatings, causing an unwanted signal that is superimposed on the useful signal coming from the target that is processed by the electronic an optical radar, typically but not exclusively an amplitude modulation radar. Consequently, the measurement of the distance and/or the reflectivity of the target of interest is subject to a systematic error caused by this unwanted signal.

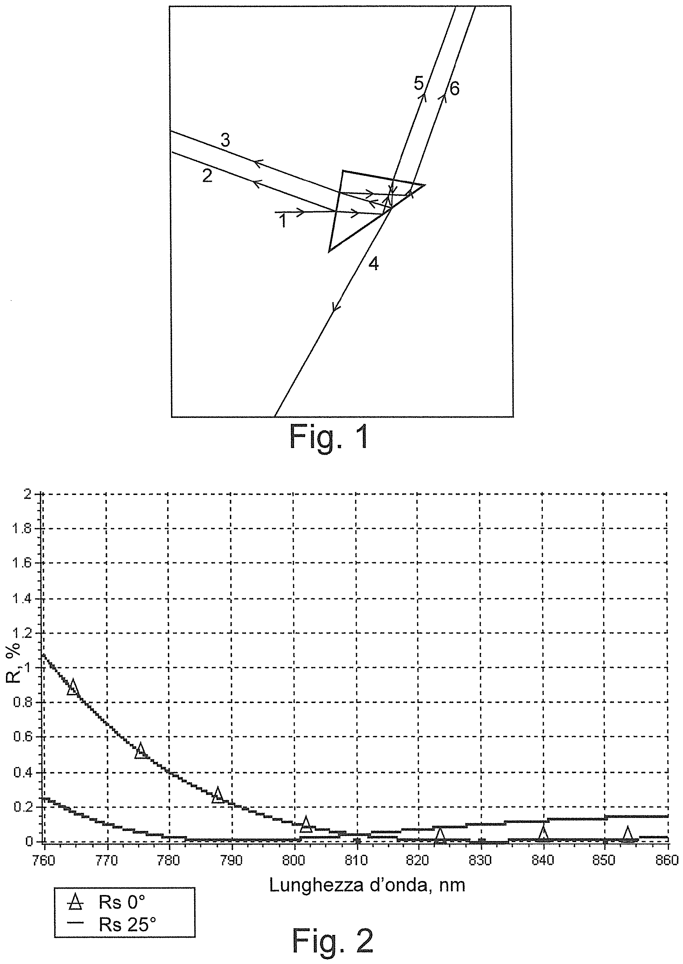

To better understand what are the problems of laser signals overlap we consider the Fig.1.

The scanning prism is rotated approximately 10 degrees from the initial position of normal incidence to the cathetus. The different rays are highlighted: 1 is the incident beam, 5 is the transmitted beam which hits the target to be measured, the components 2 and 3 are respectively the unwanted rays coming from the reflections of the first and second cathetus, and finally the beam 6, which is generated by the double reflection of the two catheti. The beam 4 can be neglected because the hypotenuse of the prism is generally provided with a total reflection "mirrorlike" coating.

Then the collected (false) optical powers, corresponding to the laser beams 2, 3, 6 that strike other targets in the scene of interest, add up vectorially to the (real) optical power coming from the actual target whose distance is to be measured (beams 1 and 5).

Always from Figure 1, the importance of the characteristics of the AR (antireflection coating) of the catheti is derived. If $C_{AR}$ is the coefficient of reflection of the coating, the signals 2 and 3, in the forward and return paths towards a different (undesirable) target, are attenuated by a factor $C_{AR}^2$, the signal 6 instead has an attenuation equal to $C_{AR}^4$ (which turns out to be negligible).

Fig. 2 shows a typical trend of the R characteristic of an AR (anti-reflection) coating for nuclear applications as a function of wavelength and angle of incidence (curves with different Rs).

It is possible to show that the equation of the collected power in a laser radar sensor is (D. Nitzan et al., "The measurement and use of registered reflectance and range in date scene analysis", Proc. Of the IEEE, vol.65 , No.2 (1977), pag.206-220):

$$P_S = \frac{P_i * \alpha * \left( \rho \cos(\theta) + \gamma * f(\theta) \right) * D^2}{4R^2}$$

wherein Ps is the optical power collected by the detector, $P_i$ is the incident power, $\alpha$ is a coefficient that includes the optical losses of the electro-optical system, $\rho$ and $\gamma$ are the coefficients of Lambertian scattering and specular reflection dependent on the characteristics of the target and the angle of incidence $\theta$ (angle between the scanning beam and the normal to the target surface), D and R are respectively the receiving optics diameter and the target distance.

Briefly we have:

$$P_S = W * K$$

with

$$W = \frac{P_i \alpha D^2}{4}$$

and

$$K = \frac{\rho_T(\theta)}{R^2}$$

which depends only on the total scattering characteristics ($\rho_T(\theta)$) of the (Lambertian and specular) target and on its distance R.

The worst case occurs when the angular difference (or phase) of the signal vector (real target, TT) and the background vector (false target, FT) is 90 degrees. For geometric simplicity, we assume that the true and false targets are located respectively on generic x and y axes. These components are added vectorially and have an amplitude proportional to the collected optical power and a phase angle that depends on the distance.

In general, the amplitude (Amp) of the vectors S and B (Signal\Background) are:

$$\text{Amp } (\mathbf{S}) = \text{TT} = \text{Q} * \text{W} * \text{K}_S$$

with

$$K_S = \frac{\rho_{TS}(\theta)}{R_S^2}$$

and

$$\text{Amp } (\mathbf{B}) = \text{FT} = \text{Q} * \text{W} * \text{K}_B$$

with

$$K_B = \frac{\rho_{TB}(\theta)}{R_B^2}$$

wherein the Q parameter includes the responsivity of the detector and the amplification factors of the radar electronics. Moreover, with the assumptions mentioned above, we have:

$$\text{Re}(\mathbf{S}) = \text{TT}, \quad \text{Im}(\mathbf{S}) = 0 \quad \text{(true target)}$$

$$\text{Re}(\mathbf{B}) = 0, \quad \text{Im}(\mathbf{B}) = \text{FT} \quad \text{(false target)}$$

and, after the vector composition, we obtain:

$$\text{Re}(\mathbf{S+B}) = \text{TT}, \quad \text{Im}(\mathbf{S+B}) = \text{FT}$$

Therefore, the phase angle turns out to be:

$$\beta = \mathrm{arctg(FT/TT)}$$

Furthermore, the background (false target), to the difference signal (true target), has 2 more reflections (on cathetuses), as shown in Fig. 1. The optical power decreases by a factor $C_{AR}$ for each reflection, effect that can be included, for example, in the total optical losses $\alpha$ (Indicated with $W_{CAR}$).

In addition, the phase error due to the contribution of the false target must be less than the intrinsic noise of the measurement of the true target (standard deviation sigma).

We assume, as a margin, a factor of 2 for the contribution due to the electronic noise of the signal detection. It is also reasonable to consider another factor of 2 for a geometry contribution in the event of possible blockages due to the relative position of the (true and false) beams while scanning the prism (the worst case occurs when the beam of the signal finds itself on the edge of the catheter, while the false signal has a larger angle of collection of the optical power scattered by the target).

Hence, the phase angle $\beta$ corresponding to the false target turns out to be:

$$\beta = arctg\,\frac{FT}{TT} = arctg\,\frac{Q * W_{CAR} * K_B}{Q * W * K_S} = arctg\,\frac{Q * W * (C_{AR}^2) * K_B}{Q * W * K_S}$$

Considering a coefficient $C_{AR}$ equal to 0.5%, a range-accuracy measurement of the true target equal to 0.5mm (accuracy error), which corresponds to 0.6 degrees ($\beta_{TT}$, angle of the true signal at 500MHz of frequency modulation, in the case of the only electronic detection contribution, we have:

$$\beta \leq \frac{\beta_{TT}}{2}$$

i.e.:

$$tg(0.3^o) \geq \frac{(C_{AR}^2) * K_B}{K_S}$$

or

$$K_S \geq \frac{K_B}{209.2}$$

while, also including the geometric factor, we have:

$$K_S \geq \frac{K_B}{104.6}$$

In general, we obtain the following table:

Table 1 - Evaluation of threshold parameters (Ks, $K_B$) for the correct measurement of distance in a amplitude modulation laser radar system.

| Frequency modulation | distance accuracy (mm) | AR coefficient $C_{AR}$(%) | (Electronic Contribution) $K_S \geq$ | (Contributions electronic and geometric) $K_S \geq$ |
|---|---|---|---|---|
| 500 | 0.5 | 0.5 | $K_B$/209.2 | $K_B$/104.6 |
| 1000 | 0.5 | 0.5 | $K_B$/418.8 | $K_B$/209.4 |
| 1000 | 0.5 | 0.4 | $K_B$/ 654 | $K_B$/ 327 |
| 1000 | 0.5 | 0.3 | $K_B$/1163.5 | $K_B$/581.7 |

(continued)

| Frequency modulation | distance accuracy (mm) | AR coefficient $C_{AR}$(%) | (Electronic Contribution) $K_S \geq$ | (Contributions electronic and geometric) $K_S \geq$ |
|---|---|---|---|---|
| 1000 | 0.1 | 0.5 | $K_B/83.7$ | $K_B/41.88$ |
| 1000 | 0.1 | 0.25 | $K_B/ 335$ | $K_B/167.5$ |
| 1000 | 0.1 | 0.2 | $K_B/523.5$ | $K_B/261.7$ |
| 1000 | 0.1 | 0.1 | $K_B/ 2094$ | $K_B/1047$ |
| 1000 | 0.2 | 0.2 | $K_B/ 1047$ | $K_B/523.5$ |

In the headers, the modulation frequencies of an amplitude modulated laser radar, accuracies in the desired distance and the reflection coefficients of the coatings ($C_{AR}$) are indicated. These considerations are valid for any "unwanted" signal and, in this analysis, we excluded the other components that have more than one double reflection in the prism.

In general, these unwanted contributions have a negative effect on the range measurement even in other modulated systems (frequency modulation, pulsed, etc.).

Table 1 shows that, in very high accuracy conditions (100 microns), the contribution of the overlap of the unwanted signals can be crucial if the coefficient $C_{AR}$ of the coating of the prism catheti is greater than 0.2% in all the adverse operating conditions. In hostile environments, such as in nuclear power plants (in fusion or fission), the inevitable degradation of the performance of the coatings could prevent the correct operation of the AM laser radar.

JP2000206243 discloses a scanning system for small angles in the tilt direction (Section A), it also seems that all the receiving telescope rotates in the tilt direction. Then, said scanning system cannot be considered as compact and light-weight, with a tilt engine which cannot be miniaturized and provided with low torque.

Moreover, the forward and return propagation of the beam (or more beams produced by as many laser sources according to convenience) takes place in a direct line by using mirror systems to direct the beams. The Coudé telescope of JP2000206243 (the document speaks of "Coudé telescope" and not of "Coudé system" in general) includes retro-flectors used only for the purpose of optical axis alignment procedures of transmission and reception and not for scanning on remote targets, the scanning being accomplished by moving around the whole telescope and its alignment system (with the corner cube retroreflectors) as shown in Fig. 1A.

Moreover, all the weight of the electro-optical unit 323,324,325,326,327,328 burden on the pan motor, and therefore also the latter engine cannot be reduced, and be compact and have low torque.

The system of WO2014/056476 ("Laser beam directing system and method for orienting optical components of the laser beam directing system") comprises four mirrors for laser beams orientation procedures, as in the case of JP2000206243. Instead, the scanning is effected by rotating around the whole telescope including mirrors, lasers and detectors, leading the same problems as illustrated for JP2000206243.

Document EP 2620745 A1 discloses a 4-mirror system (already known optical configuration) for the laser beam orientation procedures, as in the case of JP2000206243 or WO2014/056476. Instead, the scanning is effected by rotating around the whole telescope including mirrors, leading to the same problems as illustrated for JP2000206243 and WO2014/056476. In all the proposed configurations (for example fig. 2A and 2B), the weights of the source and the optical receiver and the detector affect the pan motor (that can not be then small and with low torque, and then miniaturized for applications in hostile environments).

A laser radar is generally composed of electro-optic devices (lasers and detectors), focusing and receiving optical systems the signal reflected by the target, and a scanning system for the addressing of the laser beam onto the target. In the design of the most suitable scanning optical system for a laser radar sensor in hostile environments, one must necessarily also take into account the dimensional development (usually the accesses of nuclear reactors are very small circular holes) and the optimal scheme of the support optical system (passive module) which is an integral part of the scanning system.

The object of the present invention is to provide an apparatus able to allow at the same time:

- the conceptual reduction in the weight and dimensions of the movable scanning system
- The monostatic configuration
- Stationarity of the origin of coordinates
- The reduction of the cross section for typical reduced access general in hostile environments
- Removal of all electro-optical devices (lasers, detectors, profilers) from the passive module because it is placed in the hostile environment.

For this reason, it makes sense to investigate and evaluate alternative laser beams scanning optical systems, which can solve the above problems of unwanted reflection.

It is object of the present invention an optical apparatus capable of scanning over the entire solid angle (a part from the rear shadow cone as determined by encumbrance of the optical system for launching and receiving radar signals), and which ensures a high degree of compaction and inherent strength so that it can be used in hostile environments, and in particular in nuclear fission or fusion reactors.

It is subject-matter of the present invention an apparatus and a method according to the attached claims.

The present invention will be now described, for illustrative but not limitative purposes, according to one embodiment thereof, with particular reference to the accompanying figures, wherein:

- Figure 1 shows the effective tracking of the laser beams within a prism, according to the prior arte;
- Figure 2 shows typical characteristics of an AR coating, according to the prior art;
- Figure 3 shows a simplified diagram of the compact optical scanning system according to one embodiment of the invention;
- Figure 4 shows a sectional view of the system of Figure 3;
- Figure 5 shows a top view of the system of Figure 3;
- Figure 6 shows a simplified diagram of the whole motor and optical encoder, according to one embodiment of the invention;
- Figure 7 shows an optical system that includes the scanning system, according to the invention;
- Figure 8 shows a different embodiment of the apparatus according to the invention;
- Figure 9 shows an embodiment of the autofocus system of the receiving bundle with three individual fibers in two possible non-limiting configurations;
- Figure 10 shows the scanning head with modified mirror holder;
- Figure 11 shows a Gaussian distribution with beam radius $w_z$ = 3 mm;
- Figure 12 shows a reflective pattern on the lateral areas of the mirror holder of Figure 10, to acquire the profile of the laser spot along the scanning direction (x-axis);
- Figure 13 shows a comparison between an ideal distribution obtained with infinitely thin line and a real distribution obtained with line width of 2 mm - Gaussian beam radius = 3mm, measured beam radius 3.21991 (the width of the distribution is normalized to 1);
- Figure 14 shows the behavior of the error distribution obtained in the comparison between ideal and that obtained with 2mm line as a function of the radius of the Gaussian beam;
- Figure 15 shows a pattern for generating a profile of the laser spot according to the two orthogonal directions -45° and 45°, referred to the scan direction (x-axis);
- Figure 16 shows a pattern for generating a profile of the laser spot according to the three directions 0°, 60°, 120°, related to the scan direction (x-axis);
- Figure 17 shows a pattern for generating a profile of the laser spot according to the five directions 0°, 30°, 60°, 150°, 120°, with respect to the scan direction (x-axis);
- Figure 18 shows the patterns that are used to generate the profile of the laser spot according to the two general directions -$\phi$ and +$\phi$, to evaluate the misalignment of the scanning laser beam with respect to the nominal position.

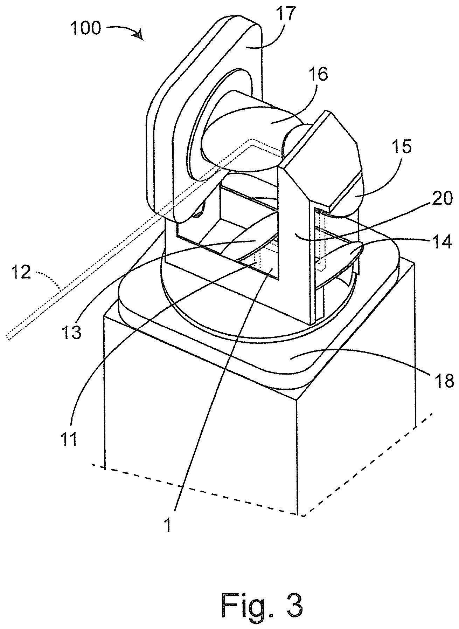

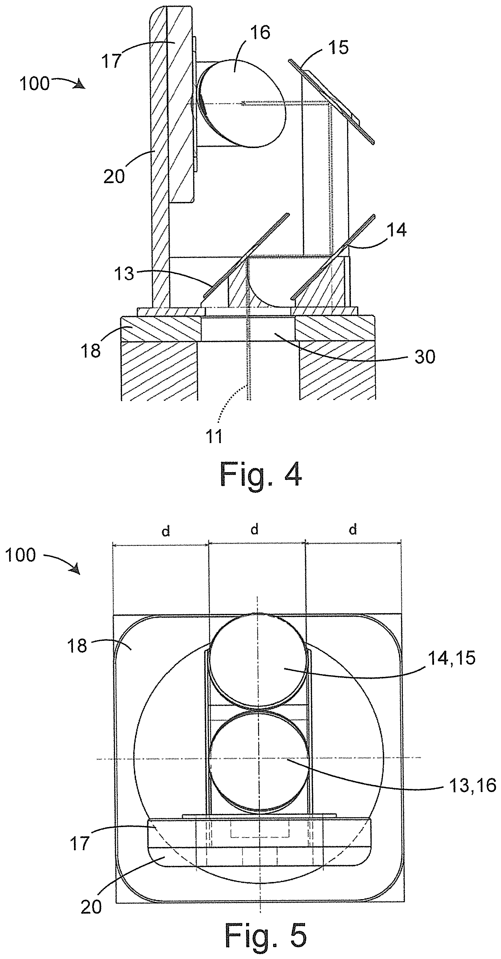

Figures 3-5 show one simplified diagram of the new scanning system 100 of the present invention. It is used in particular, but not exclusively, in a laser radar system.

The laser beams 11 and 12 are the signals that come from the launching system (either focusing or collimation) and the receiving (collecting) system of the laser sensor and that are sent to the target. The mirrors 13, 14 and 15 are fixed and placed at 45° degrees (or other tilt ensuring that the input and output direction of the laser), the mirror 16 allows a rotation of the laser beam in a vertical plane by a tilt rotator 17 shown in the figure (with an angle of deflection of the beam equal to the angle of mechanical rotation), whose center of rotation during the scan coincides with the incident laser beam. Said vertical plane has the axis of rotation coinciding with the optical axis of the system and then with the direction of the beam 11. By means of the pan rotator 18 placed on a horizontal plane, it is possible to scan the scene in the entire solid angle, with a 180 degree rotation. The above system is of the polar type, allowing also an easy reconstruction of the images in intensity and range by means of simple geometrical considerations and transformations of coordinate systems from polar to Cartesian, what is per se known in the prior art.

This configuration is not a Coudé system. In fact, the Coudé system is an optical configuration specific to telescopes when one wants to extract the focus off-axis, see the article of Whitford, AE, Journal: The Construction of Large Telescopes, from Symposium Proceedings no. 27 held in Tucson, Arizona, Pasadena and Mount Hamilton, California, USA, 5-12 April 1965. Edited by David Livingstone Crawford. International Astronomical Union. Symposium no. 27, Academic Press, London, p.42-44. See also entry "Reflecting telescope" on Wikipedia (English). The system of the present invention however does not allow the retroreflectivity as in the case of the corner cube retroreflector of JP2000206243. On the contrary, the present invention uses a 4-mirror configuration to realize a scanning system, without moving the entire system, but only the four-mirror system.

This new configuration ensures a high compaction factor, with mirrors placed in a position such as to have also a front view (in contrast to the use of a single mirror that does not allow to scan all angles). Moreover, the pan rotator has a very small axial load, due to the small weight of the mirrors and the tilt motor, which can be miniaturized since it must only move the scanning mirror. This is a very important consideration to be emphasized because the piezoelectric motors that are generally used in critical operating conditions, as in the mentioned hostile environments, have not high driving torque and do not tolerate large off-axis loads. The optical configuration according to the invention solves in a comprehensive manner the problems of scanning systems in locations where it is not possible the use of motors with high torque due to the criticality of the environment.

The use of mirrors in the configuration according to the invention ensures inter alia the inclination constancy of the optical surfaces with respect to the incident laser beam, allowing to obtain the dielectric coating with very high coefficients of reflection (greater than 99.5%). Furthermore, there are no contributions of extra-reflections, typical of the prism, on the optical elements, that may cause problems of unwanted signals, apart from the reduced diffusion on the mirrors that can be removed with anti-straylight techniques which provide, according to the invention, a spatial filter by a ring near the stray light source. Such diffusion is constant over time because the relative angles between mirrors and laser beam do not change, with the possibility of a calibration for its eventual elimination.

A further advantage of the mirrors-based configuration is the constancy of the origin position in the space of the polar reference system (the point of exit of the laser beam from the last mirror) in which the 3D images of the scanned surfaces are then produced. In the case of the prism, for example the origin position (point of exit of the laser from the prism) varies with the inclination of the faces and renders the 3D reconstruction complex, with the possibility of errors due to the exact determination of the virtual reference center.

In addition, the scheme according to the invention allows the minimization of the horizontal section of the overall optical system, whose square (or circular) section has a maximum dimension (of the side or diameter) equal to 3 times the useful opening of the receiving optics, in view of the arrangement of the mirrors in the preferred embodiment; so any reductions in this section affect the optics opening according to a coefficient of 1/3.

The motors shown in the diagram of Fig. 3 are for example of the direct-drive piezo-ceramic type; in practice, there is no gear for transmitting the movement since the actuators act directly on the rotating part. The pan rotator should be provided with a central hole that is concentric with the rotor and this allows the positioning of the launching/receiving optical part in a coaxial manner in a position underneath the rotator itself, thus decreasing the overall dimensions of the horizontal section of the complete system. This is very important in a visual inspection system that has reduced dimensions of access windows and that is to be inserted and withdraw through such "ports".

The scanning system 100 is a monostatic system which scans a laser beam 11 onto a remote target, in particular for a laser radar scanning (the collimation or focusing section of the incident laser beams is in a monostatic configuration with the receiving section receiving the beams). The system comprises a first rotating element 18 of a first plane moved by a pan motor and a second rotating element 17 of a second plane moved by a tilt motor.

The first rotating element 18 has a central hole 30 for the input of the laser beam 11, positioned so that the laser beam 11 is aligned with the central hole or otherwise passes through the hole. To accommodate the optics, the first rotating element 18 is rigidly connected to a rigid casing 20, which develops starting from said first plane in a direction of development perpendicular to said first plane, and to which the following is attached:

- a first reflective element 13 that is inclined with respect to the first plane and positioned so as to collect the laser beam 11 at the same point during the rotation of the first rotating element 18; in this way it ensures the uniformity of the laser beam transmission;
- a second reflective element 14, inclined with respect to said first plane and axially offset with respect to the axis of the central hole (and, more generally, outside the projection of said central hole along the direction of development), the second reflective element 14 being positioned in such a way to collect the laser beam 11 after reflection on the first reflective element 13;
- a third reflective element 15, inclined with respect to said first plane and positioned above said second reflective element 14, in said direction of development, so as to collect the laser beam 11 after reflection on said second reflective element 14 and to reflect it in a direction perpendicular to the second plane (tilt direction, defined by the rotation of the motor 17);

In order to finally let out the scanning laser beam in the right direction, to the second rotating element 17 a quarter reflective element 16 is fixed, which is positioned so as to rotate around said perpendicular direction and to collect said laser beam 11 always in the same point once reflected by said third reflective element 15, the fourth reflective element 16 being configured to send the laser beam 11 toward the target parallel to said second plane, thereby the fourth reflective element 16 being configured to collect the laser beam 12 returning from the target, sending it, by reflection on that third 15, second 14 and first 13 reflective elements, to said central hole 30.

The expression "always the same point" is naturally to be understood always in the same point area, the laser beam having in any case a non-vanishing section.

It is advantageous that the first reflective element 13, the second reflective element 14 and the third reflective element 15 are inclined at 45° with respect to said first plane; however, other configurations are possible as well, provide that the scanning beam output direction be always the one already indicated, i.e. parallel to the second plane (tilt) .

The reflective elements can be constituted by mirrors or other transparent optical elements, with metallic or dielectric coatings, and their shape may be circular or elliptical, with sizes ranging from 2 to 10 cm.

Although the 4 mirrors or reflective elements basic configuration is the most simple and convenient, nothing prevents that between said second and said third reflective element one or more further reflective elements are interposed, which convey the laser beam from the second to the third reflective element.

The tilt and pan motor can be engines of the piezo-ceramic or magnetic or compressed gas type.

It is preferable, although not essential, that said central hole has a diameter from 2 to 10 cm.

Another interesting feature of the system is the type and the positioning of the encoder in order not to degrade the performance of the scanning system itself.

To make an image reconstruction by means of the range and amplitude data provided by the laser radar, it is essential to know the two angular positions of the scanning head (tilt and pan) with high accuracy.

To this end, the encoder discs are fastened directly onto the rotating part and then are rigidly integral with the mirrors that manage the deflection of the beam, (in Figure 3 the discs of the encoder are included inside the box of the motors 17 and 18). These incremental encoders are preferably of the rotary type, but according to the invention have special features that allow to adapt them to hostile environments typical of reactors for nuclear fission and fusion. One feature is the type of material which in this case must be a temperature-resistant glass, quartz would be even better. Even the opaque-to-light notches (which traditionally are present in the encoder alternately to transparent notches) must be resistant and to this end must be obtained by metal deposition (e.g. chrome). The above characteristics are not of common commercial level, but can be found in the market or requested as custom products.

A special feature that can not be found in the market is the reading electronics of the encoder. According to the prior art, it is integrated directly in the encoder itself and is not resistant to the mentioned hostile conditions, even if it were produced with the best devices resistant to radiation. For this reason, according to the invention, the electronic reading system is located remotely, outside the hostile environment and the optical information are transported to the encoder disc using optical fibers of the resistant to radiation (rad hard) type.

To improve the mechanical robustness, encoder discs are used with average number of notches (notches 2000 to 5000 over a rotation), then the accuracy is increased by reading the encoder in an analogue way, to also appreciate a number of inter-notches positions. In this way, it is possible to increase the resolution typically by a factor from 30 to 120, therefore reaching angular accuracies of measurement from 6 to about 0.6 thousandths of a degree, while maintaining the robustness of the system and ensuring the possibility of working in the mentioned hostile conditions.

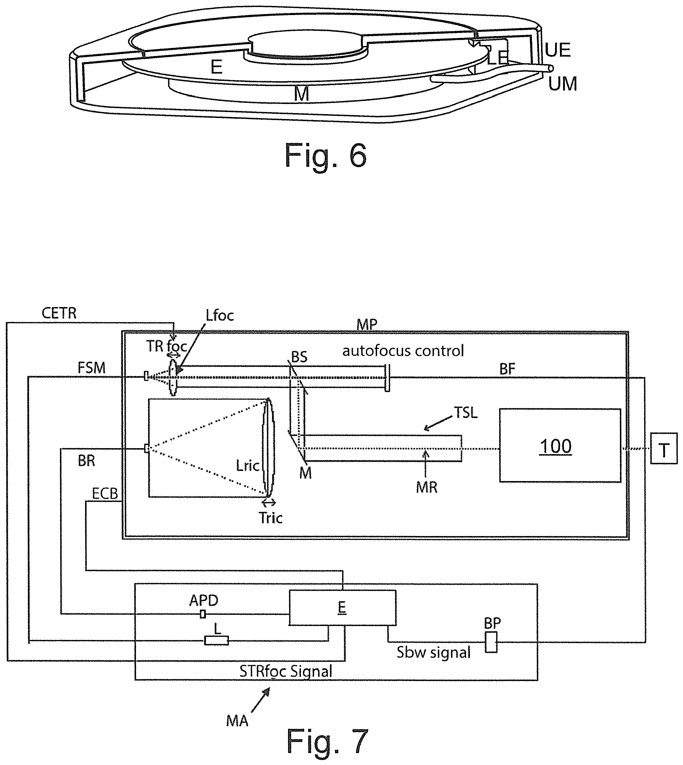

According to one aspect of the invention embodiment, Fig. 6 shows a simplified diagram of the motor and optical encoder (hard-rad) set.

Motor M with its umbilical power line UM, and the encoder disc with its reading system LE and the relevant umbilical EU are noted, the readout electronics and the engine driver are located in a remote position, screened from radiation.

The scanning system according to the invention can be used in detection laser radar sensors which are either incoherent (pulsed, amplitude, frequency and phase modulated) or coherent (frequency modulation).

The invention also discloses an optical scanning apparatus, in particular a laser radar device for viewing and ranging, comprising an active module and a passive module. The passive module (MP) comprises a launching and receiving (collecting) section and the optical scanning system described above and subject-matter of the invention, placed in series with one another.

The launch and reception section can only use optical configurations based on reflective elements (flat or curved mirrors), based only on lenses or possibly mixed configurations.

The active module may comprise a control electronics as for example according to the patent application RM2004A000527: "Method and digital vector measurement system with high dynamic for the determination of amplitude and phase of a RF signal relatively to a reference signal".

We describe below the purpose and function of these two modules in hostile environments.

In fact, in these cases, there is the need to use two separate modules that can be placed also several hundreds of meters away, generally connected with optical fibers because there is typically a direct visual line, the accesses can be tightened and complicated to achieve.

The active module comprises all the electro-optical devices that can be damaged and therefore cannot be positioned in the hostile environment (presence of gamma radiation and neutrons, high temperature, high vacuum, magnetic fields).

The passive module (the probe or the measurement head) is placed in hostile place, which is not accessible and thus not directly controllable, and includes all passive elements such as structural and optical elements of high-strength silica. The only component that is to be chosen suitably is the system for scanning the laser beam onto the target, which must be compact and lightweight.

In the described embodiment, the compact scanning ("4 mirrors") system is an integral part of the passive module.

In hostile environments there are additional issues that need to be addressed: all initial references (look-up tables obtained in the laboratory for autofocus systems of launching and receiving lenses, references to "zero/initial" distance, control of autofocus systems, particularly for the launch section where variations of millimeter fractions can affect the viewing measurement) are lost due to non-predictable thermal expansion and parametric variations of the optical characteristics. Thus, the measurement system must provide for processes of self-calibration of all its critical parameters, which are compatible with the hostile environment, for the optimization of the electro-optical performance of the laser radar. The division between the active module and the passive module as described above therefore solves already itself a technical problem.

With reference to Figure 7, an embodiment of an optical system is now described, in which the optical scanning system according to the invention is illustrated by the rectangle with reference numeral 100.

This system provides an active module MA and a passive module MP. The laser signal generated by the laser L in the active module MA is sent to a focusing lens Lfoc FSM through a single mode or photonic crystals fiber (the passage from the fiber to the focusing lens is made in a known way, see the document IT1343719). The focusing lens is moved by a focusing TRfoc shifter that receives the control signal E from the control electronics of the active module MA.

A beam splitter BS is positioned downstream of the focusing lens Lfoc and allows a part of the laser beam arriving on a imaging fiber bundle BF. The signal thus obtained is transferred to a light beam (laser) profilometer BP, and then the beam width SBW signal is sent to the control electronics. This, in turn, as a function of the SBW signal generates a signal STRfoc that is sent to the focusing shifter TRfoc that moves the focusing lens Lfoc (through a suitable connection CETR).

The optical fiber bundle BF measures the size of the spot of the laser beam outputting the beam splitter BS. Other electrical cables ECB are supplied to power the passive module engines.

This is done for at least one position of bi-focus step, because the other position can be calculated thanks to the relative position. In the case where this distance is different, then the procedure must be performed for both positions (or more positions in the case of multi-step focus).

In this way, the "locked" focus position will be kept in order to minimize the effects of defocusing during measurement. Two equivalent optical solutions are proposed for the sending of the laser beam onto the bundle, because the diameter of the spot is typically larger than that of the bundle. One can use a lens or a focusing system with demagnification larger than 6. In this way, the beam is entirely focused on the bundled BF and the measurement of spot is immediate.

In the case of a bundle with small section (when, for problems of bending radius is necessary to use a bundle with the smallest diameter of the laser beam waist) one can use an off-axis alignment with the fiber, which allows to measure the curvature radius of the part the spot that falls in the bundle.

Reverting on the diagram of the optical system, the beam deflected by the beam splitter BS is reflected by a mirror M and becomes the main beam MR, which then passes through a anti-straylight tube TSL and the scanning optical device 100.

The return light from the target is collected in the direction opposite to the main beam MR behind the mirror M, by a receiving lens LRIC moved by a shifter Tric, which focuses the light on another bundle BR that carries the signal to a photo-detector APD connected to the control electronics E.

In summary, according to one embodiment, the passive module can comprise:

- a TRfoc focus shifter that receives a control signal from said active module MA and moves said focusing system Lfoc;
- a beam splitter BS placed at the exit of said focusing system Lfoc;
- a imaging fiber bundle BF which collects part of the light beam transmitted by the beam splitter BS and carries it to the active module MA;
- one mirror M which intercepts a part of the light beam deflected by said beam splitter BS and reflects it, generating a bright reflection beam MR, said mirror having a first reflective face and a second face opposite to said first face;
- said scanning optical device 100 that scans said reflected light beam on said target MR T;
- a reception system LRIC, facing said second face of the mirror M, which focuses the light in reception from said target T onto a further imaging optical fiber bundle BR that carries the signal, reflected from the target (T), to said active module MA;
- a translator Tric of LRIC receiving system.

The MA active module may include:

- an electronic control E,
- a light beam source that generates a light beam L led by an single-mode optical fiber FSM to said focusing system Lfoc;
- a photo-detector APD which receives said further imaging optical fibers bundles BR and is connected to said electronic control unit E;
- a light beam profilometer BP that receives said imaging optical fiber bundle BF and sends to said electronic control unit a waist signal SBW of the light beam transmitted by said beam splitter BS;
- a connection CETR between said electronic control unit E and said focus shifter TRfoc, designed to carry a control signal STRfoc.

According to one aspect of the invention embodiment, when the waist is larger than the diameter of said imaging optical fiber bundle, between said beam splitter and said imaging optical fiber bundle a focusing lens with demagnification is placed, in particular with demagnification greater than 6.

In one embodiment, the design parameters of the passive module are chosen so that the diameter of the reflected light beam is smaller than 15mm.

In general, the division between passive module and active module, for example as in claim 1, leads to advantages including:

- flexibility of the modular system;
- stability of the optical parameters of the laser beams because the beam that is transported in the fiber does not interact with the external environment;
- compactness and lightness of the passive module that has now no electrical and electronic motor driver; the lightness allows not to burden the electrical scanning engines which usually have a small torque;
- the possibility to intervene on the components that are more subject to damage or wear and which are included in the active module;
- the possibility of introducing the passive module in hostile environments without risking damage of the weaker components which are included in the active module such as lasers, detectors and electronic systems for the detection of radar and control signals.

**Further embodiments**

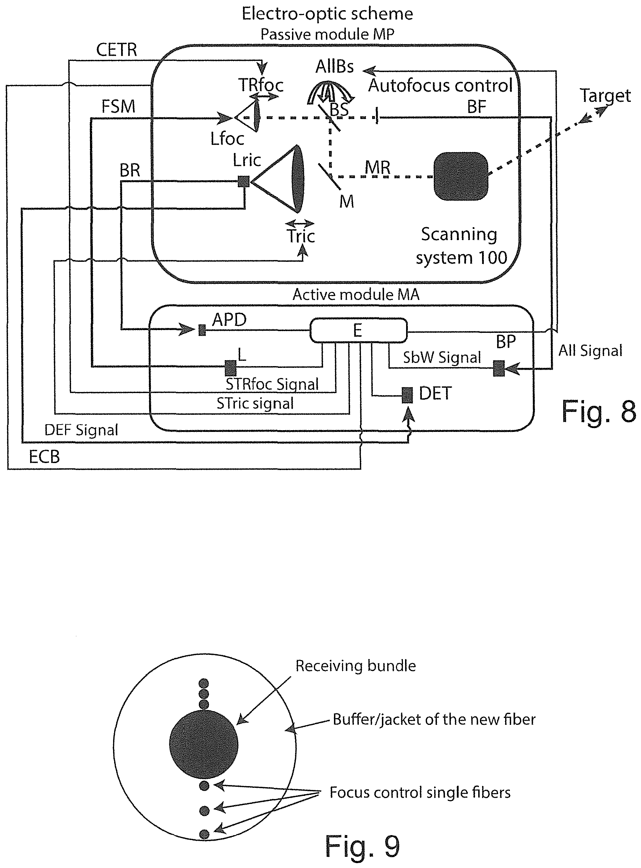

A further embodiment of the present invention is illustrated in Figure 8. It is an autofocus system on the receiving bundle BR composed of single fibers (typically with a diameter equal to 50 microns) assembled in the vicinity of the receiver bundle BR, in alternating continue configuration (figure 9), so as to generate a control signal (signal DEF) on one or more detectors (DET). Said signal will serve to improve the performance of the sensor for the measurement of targets placed especially at small distances, optimizing the movement of the shifter Tric.

The receiver bundle BR can be replaced by fibers for "telecom" applications and with low dispersion coefficient (GRIN) or photonic crystal fibers. The spatial configuration of the individual fibers can be optimized depending on the aberrations of the optical receiver group.

**Configuration and self-calibration**

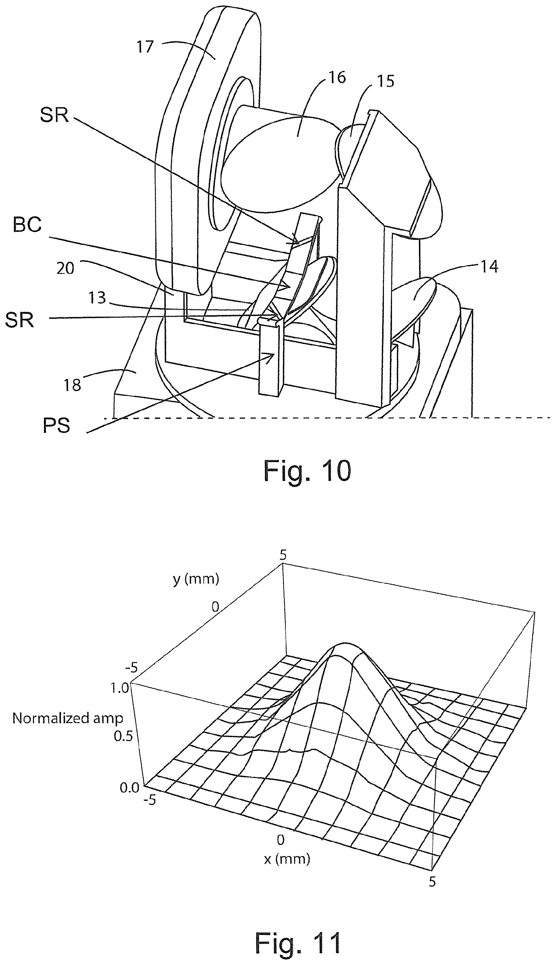

As a further embodiment of the present invention, a modification of the already described scanning system, as seen from figure 10, is illustrated. The scanning system now includes a modified mirrors-holder PS.

This configuration integrates, in the back support of the mirror-holder of the first reflection (mirror) 13 of the incident beam 11, a cooperative target BC (reflective area) with special features for compatibility with hostile environments (typically metal), shaped like a cylinder sector (the reflective area can be extended as the illustrated cylinder sector or only as one of its central part), with typical width of the order of a cm (in any case larger than the laser spot of said one or more laser beams), with the center corresponding to the center of rotation of the scanning mirror 16, whose median line (generatrix) belongs to the beam scan plane. The distance of said scanning mirror 16 with respect to support BC is chosen so as to optimize the compactness of the entire scanning system and the effect of defocusing of the cooperative target located then at small distances from receiver optics.

During the rotation of the mirror 16, in the "dark" scan corner of the scene (remote target T), the laser radar is able to acquire a "reference distance signal" on the back of the mirror-holder BC because it receives the light scattered in the "dark zone" by the mirror 16 (angle at which the mirror 16 is unable to send the beam on the remote target). With such a signal, one can perform a calibration of the distance in all operating conditions including the same transmission and reception channels that have considerable lengths (hundreds of meters) and that during the long-lasting measurements are subject to thermal and irradiation effects (environments hostile with adverse environmental conditions that can change the optical parameters of the beam) by altering the measurement of the radar signal flight time. Once the signal has been acquired as above, the adjustment can be made by known methods. In practice it deals with:

> A. scanning said one or more laser beams onto said remote target T;
> B. acquiring the time of flight of said one or more laser beams by said collimation or focusing section to said receiving section through reflection on said remote target T;
> C. directing said first mirror 13 toward said cooperative target BC and measuring the distance from said cylinder center to said cooperative target BC;
> D. Repeating steps A and C by performing a self-calibration of the apparatus as a function of the difference between said distance as measured in step C and the nominal distance from said cylinder center to said cooperative target BC.

The same above central area BC also allows a power calibration (reflectivity). In fact, the signal collected in central zone BC can be analyzed in its amplitude component (possibly using an appropriate "end stroke" of the collecting optics). This allows to compensate for amplitude drifts of the whole electro-optical system during the measurement, which can last several hours, and then to avoid mismatching of brightness when non-simultaneous images overlap, which have shared overlapping areas. This allows to properly evaluate the surface state of the remote target, which is a typical problem of vision in the vessel of nuclear fusion reactors. In practice it deals with:

> A. scanning said one or more laser beams onto said remote target T;
> B. acquiring the time of flight from said one or more laser beams by said collimating or focusing section to said receiving section through reflection on said remote target T;
> C. directing said first mirror (13) towards the said cooperative target BC and measuring the reflectivity of said cooperative target BC;
> D. Repeating steps A and C by performing a self-calibration of the apparatus as a function of the difference between said reflectivity measured in step C and the nominal reflectivity of said cooperative target BC.

**Determining the beam profile**

In addition to the reflecting central area (BC), one can provide on said mirror further reflective side regions SR (further cooperative targets) as well, which are preferably inclined, to determine the beam profile.

It is assumed that the laser beam has a distribution of intensity approximating the Gaussian distribution (see Fig. 11) described by the law (x and y are the references of a plane of representation of the development of the curved surface of the mirrors-holder) :

$$I(x,y) = I_0\, e^{(-2(x^2+y^2)/w_z{}^2)} \tag{1}$$

wherein wz represents the radius of the beam section (when the intensity is reduced to $1/e^2$). This value is relative to the fixed and constant z height corresponding to the back of the mirror-holder, which is shaped as a cylindrical sector centered on the origin of the scanning system (center of the mirror 16) .

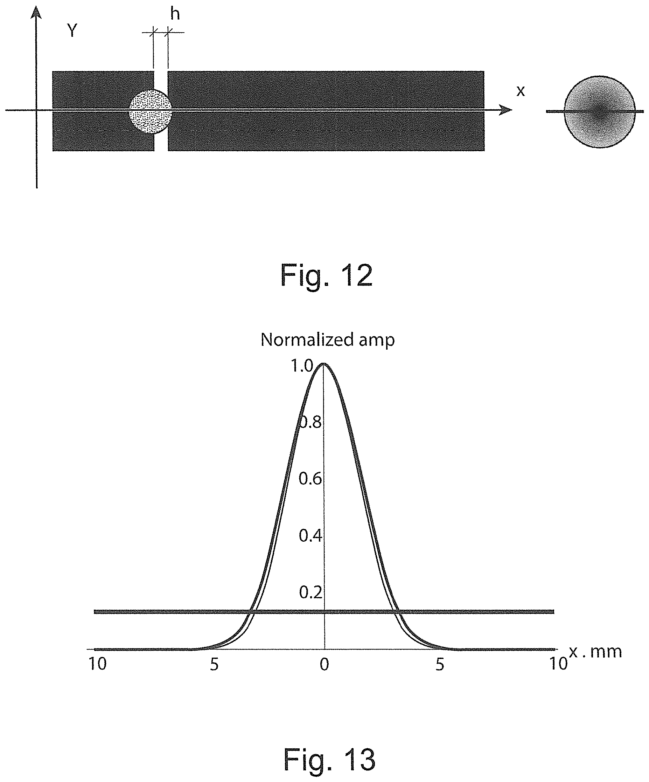

In the present case, as illustrated in Figure 12, the back of the mirror-holder is absorbent black with a unique reflective white line parallel to the short side; during the scan, the laser spot will gradually translate onto reflective white line. The position will be detected by the encoder of the tilt motor and from this the corresponding abscissa x of the mirror relative to the back of the mirror-holder will be derived. In the following discussion, the abscissa x is considered rectilinear, since for small angles the lengths of the subtended chord and circumference are approximately equal.

Assuming that the receiving optical visual field includes the whole area illuminated by the laser beam, during the scanning subsequent information will be acquired during passage of the laser beam on the reflective reference line, integrating then both the absorbing and the reflective illuminated parts.

One then integrates first $I(x,y)$ along y from $-2wz^2$ to $2wz^2$ (i.e. where almost all the energy of the beam is located); this allows us to pass to a distribution function in one variable x:

$$I_x(x) = \int_{-wz2}^{+wz2} I_0\, e^{(-2(x^2+y^2)/w_z{}^2)}\, dy = I_0 \sqrt{\frac{\pi}{2}}\, w_z\, \mathrm{Erf}\!\left(2\sqrt{2}\, w_z\right) e^{-\frac{2x^2}{w_z{}^2}} \tag{2}$$

wherein $\mathrm{Erf}(z) = \frac{2}{\sqrt{\pi}} \int_0^z e^{-t^2}\, dt$ is the integral of the Gaussian distribution.

Setting $I_1 = I_0 \sqrt{\frac{\pi}{2}} w_z \mathrm{Erf}\left(2\sqrt{2}\ w_z\right)$ , formula (1) can be rewritten as:

$$I_x(x) = I_1\, e^{-\frac{2x^2}{w_z^2}} \qquad\qquad (3)$$

The scan make this distribution function shift over the white line having width of h, the integration operation of the optical receiver section in practice is equivalent to a convolution of the function $Ix(X)$ and a pulse function of finite width representing the white line (on a black field along the section represented by the axis x).

If the white line were infinitely narrow (h tending to 0) this section could be formalized with a Dirac delta $\delta(x)$ and it is known that $\delta(x) * I_x(x) = I_x(x)$. In practice, we would have obtained in this case the profile along x of the distribution $I(x,y)$ scaled by multiplication factor: $F = \sqrt{\frac{\pi}{2}} w_z \mathrm{Erf}(2\sqrt{2}\ w_z)$ which is an factor independent from x, y. The scaling by a multiplicative value does not change the waist of the profile that is the object of our estimate since it is defined as a percentage of the maximum value.

To be closer to the reality, we can now formalize the white line of finite width $h$ as rectangular function represented by the product of two Heaviside step functions: $H\left(x + \frac{h}{2}\right) H\left(x - \frac{h}{2}\right)$ , we can then calculate the convolution product between such a rectangular function and $I_x(X)$:

$$I'_x(x1) = \int_{-\infty}^{\infty} H\left(x+\frac{h}{2}\right) H\left(x-\frac{h}{2}\right) I_1\ e^{-\frac{2(x1-x)^2}{w_z^2}}\, dx = \frac{1}{2} I_1 \sqrt{\frac{\pi}{2}}\ w_z \left(\mathrm{Erf}\left[\frac{h-2\,x1}{\sqrt{2}\,w_z}\right] + \right.$$
$$\left. \mathrm{Erf}\left[\frac{h+2\,x1}{\sqrt{2}\,w_z}\right]\right) H[h] \qquad\qquad (4)$$

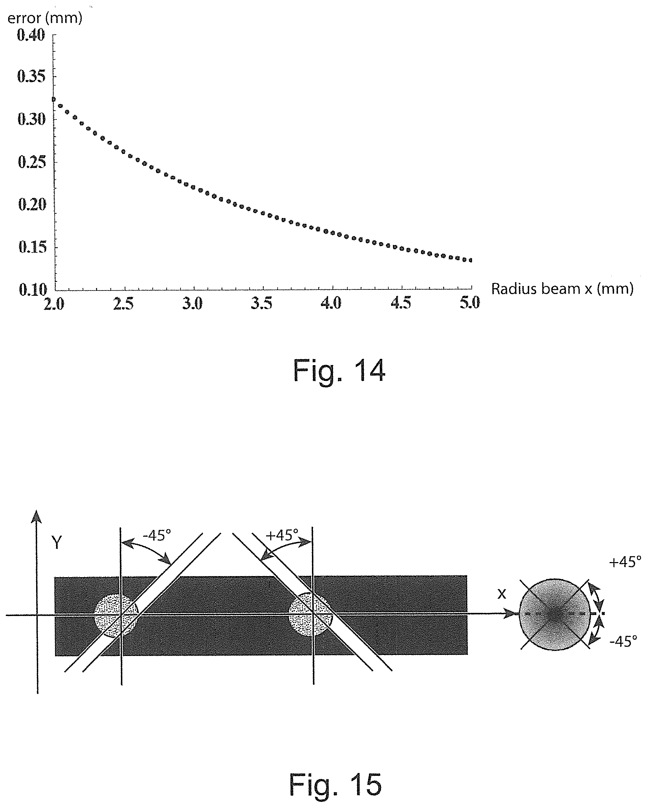

This relationship allows the numerical evaluation of the error that is made in the case where the white line having a non-infinitesimal width **h.** The numerical results are shown in Figures 13 and 14 assuming a $w_z$= 3 mm and **h** = 2 mm. They show that in this case the evaluation error is of about 0.22 mm. Figure 14 shows the error obtained in the comparison between ideal distribution (3) obtained with 2mm line with varying beam radius of the Gaussian.

In practice, the following steps are executed:

A. scanning said one or more laser beams on said remote target T;
B. acquiring the time of flight of said one or more laser beams from said collimation or focusing section to said receiving section through reflection on said remote target T;
C. directing said first mirror 13 towards said one or more additional cooperative targets SR in order to scan them, and measuring C the optical power of said one or more additional cooperative targets SR by acquiring said one or more profiles;
D. repeating the steps A to C by performing a self-calibration of the apparatus as a function of the difference between said one or more profiles and respective one or more pre-determined nominal profiles.

Since the error is systematic and repetitive, it can be predicted and corrected within certain limits, thus improving the measurement, and this in the case that the distribution is approximately Gaussian along any section, though not circularly symmetrical.

An iterative method of error correction can be based on the look-up table of the origin data of Fig. 14 according to the following procedure:
Preliminary calculation (only to be performed to generate the look-up table):
Calculating the error: $I'_x(x) - I_x(x)$ with varying beam radius $w_z$ to build up a beam radius - error look-up table.
Error correction procedure:

a) normalizing to 1 the obtained profile
b) calculating the initial $w_z$ (hereinafter $w_z(0)$) identified by the radius value at ordinate $1/e^2$

c) For *i* which varies from *0* to *N* (where *N* is the number of iterations)

    a. Finding, in the look-up table, the error $\varepsilon(i)$ corresponding to $w_z(i)$
    b. Calculating $w_z(i+1) = w_z(0) - \varepsilon(i)$

The value to the second iteration is already accurate because the initial error is decreased at each passage by about one order of magnitude, however it is possible to iterate for any number of steps.

An example is reported in Table 1. In just two steps, one is able to estimate the effective beam radius with an approximation better than 1μm.

Table 1. Example of iterative method for error correction with look-up table

| beam radius (mm) | Error (mm) | step | METHOD OF SYSTEMATIC ERROR CORRECTION example with **actual beam radius = 3 mm** |
|---|---|---|---|
| 2.99 | 0.220622 | | |
| 3. | 0.219906 | | |
| **3.01** | **0.219194** | **Step 1** | |
| 3.02 | 0.218487 | | **measured beam radius 3.21991** |
| 3.03 | 0.217785 | | |
| 3.04 | 0.217087 | | |
| 3.05 | 0.216393 | | |
| 3.06 | 0.215704 | | **Step 0:** |
| 3.07 | 0.215018 | | searching in the table the neighbor of 3.21991 reading the expected error (error = 0.205229) |
| 3.08 | 0.214337 | | |
| 3.09 | 0.213661 | | |
| 3.1 | 0.212988 | | |
| 3.11. | 0.21232 | | calculating the beam radius estimated by subtracting the error |
| 3.12 | 0.211655 | | |
| 3.13 | 0.210995 | | |
| 3.14 | 0.210339 | | **beam radius = 3.21991 - 3.01468 = 0.205229** |
| 3.15 | 0.209687 | | |
| 3:16 | 0.209038 | | |
| 3:17 | 0.208394 | | |
| (3.18) | 0.207753 | | **Step 1** : |
| 3:19 | 0.207117 | | searching in the table the neighbor of 3.01468 reading the expected error (error = 0.219194) calculating the beam radius estimated by subtracting the error |
| 3.2 | 0.206484 | | |
| 3:21 | 0.205855 | | |
| **(3.22)** | **0.205229** | **Step 0** | |
| 3:23 | 0.204608 | | |
| (3.24) | 0.20399 | | **beam radius = 3.21991 - 3.00072 = 0.219194** |
| | | | **calculated beam radius = 3.00072 mm** |

In practice the following steps are executed:

- Providing the apparatus according to claim 15, wherein said further one or more cooperative targets (SR) are one or more stripes elongated along a direction with a width **h** perpendicular to said direction;
- Calculating a look-up table that provides the measurement error of the optics of said one or more laser power profile when scanned on said one or more additional co-operative targets (SR), the error is theoretically calculated as a difference between the nominal optical power $I_x(X)$ on an elongated strip of infinitesimal width:

$$I_x(x) = I_1\, e^{-\frac{2x^2}{w_z^2}}$$

wherein $I_1 = I_0\sqrt{\frac{\pi}{2}}\, w_z \mathrm{Erf}\!\left(2\sqrt{2}\, w_z\right)$ and $\mathrm{Erf}(z) = \frac{2}{\sqrt{\pi}}\int_0^z e^{-t^2}dt$ , in which $w_z$ represents the radius of the section of the beam when the intensity is reduced to $1/e^2$, and $x$ is the coordinate of the laser beam displacement, $I_0$ is the peak power;

and the optical power $I'_x(x1)$ calculated on a strip with finite width h:

$$I'_x(x1) = \int_{-\infty}^{\infty} H\left(x+\frac{h}{2}\right) H\left(x-\frac{h}{2}\right) I_1\, e^{-\frac{2(x1-x)^2}{w_z^2}}\, dx = \frac{1}{2} I_1 \sqrt{\frac{\pi}{2}}\, w_z \left(\mathrm{Erf}\left[\frac{h-2\,x1}{\sqrt{2}w_z}\right] + \mathrm{Erf}\left[\frac{h+2\,x1}{\sqrt{2}w_z}\right]\right) H[h]$$

wherein H is the Heaviside function, and *x1* is again the coordinate of the laser beam displacement;

- Executing the method according to claim 18, obtaining said one or more profiles measured;
- Self-calibrating the focusing or collimation of said one or more laser beams on said remote target (T) as a function of said one or more profiles measured and of said look-up table.

Here self-calibration (as in previous methods) is to be understood as a retroactive action on the active focusing or collimation elements in the passive module.

## Generalization of the method to calculate multiple profiles according to specific axes

The method just described in the previous section discloses how to get the profile of the laser beam in the direction of the movement using the white line pattern orthogonal to the direction of movement on a black field shown in Figure 12.

Without prejudice to the mathematical treatment and the principle described above, this method is generalizable to the detection of multiple profiles in directions assigned by choosing the pattern in a suitable manner.

In the general case, if the line is inclined with respect to the orthogonal direction of a generic angle $\phi$, one will get the profile of the beam inclined by the same angle relative to the direction of movement, for example in the case shown in Figure 15.

The laser spot will be crossed diagonally by the white lines in two directions at -45° and +45°, then the two orthogonal profiles of the beam will be generated, as shown in the right part of the figure. But we must consider that the laser spot requires a larger shift to move completely over to the white line. In fact, it is easily seen that the increase of the displacement is inversely proportional to $cos(\phi)$, therefore the measured profile at a generic angle $\phi$ is dilated by a factor of $1/cos\,(\phi)$; Consequently, the values of the abscissa are to be multiplied by $cos\,(\phi)$ to correct the value.

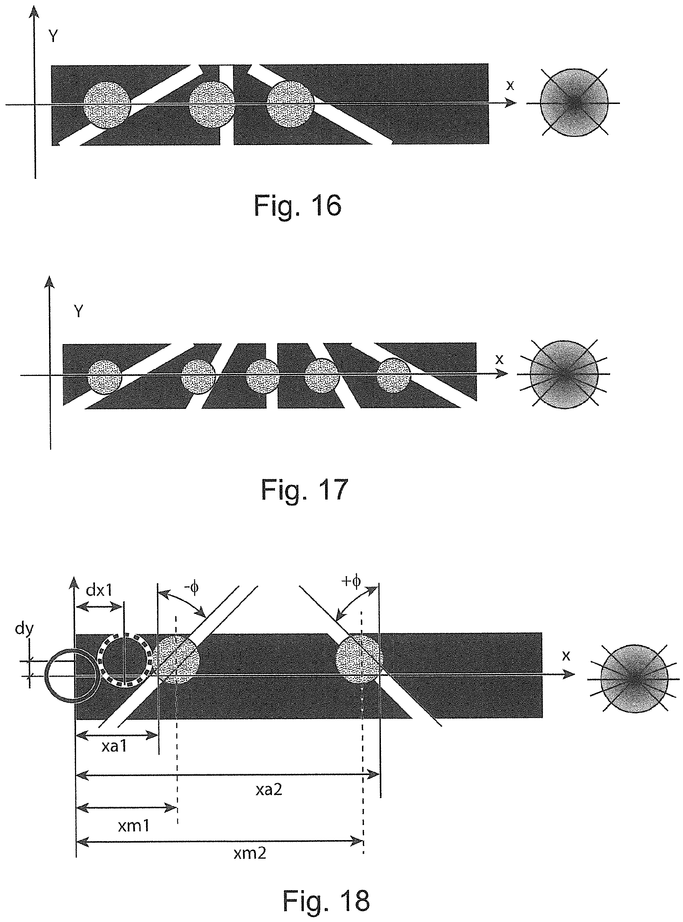

It is possible then to "profile" the beam according to general directions excluding the direction according to the x-axis that would lead to a divergence of the dilation factor $1/cos(\phi)$. By way of example, some cases are given in Figures 16 and 17.

The above-mentioned scanning zone, on the back of the mirror-holder, can then be used to determine the profile of the laser beam after the focusing lens. This information is alternative to the control of the main autofocus system with coherent bundle BF and profilometer BP, and can be used to validate, in the "dead angle", the information of the "real-time" focus control by bundle, or as an actual alternative in the case of primary system malfunction.

**Extension of multiple profiles method to calculate the misalignment**

In the ideal and the initial condition of alignment, the laser beam is perfectly aligned with the launch tube 4 and strikes the mirrors of the scanning section configuration in its center. An error in this alignment will lead to proportional errors in the measurement extent and three-dimensional image reconstruction. It is important to have a control over the quality of the alignment.

The laser beam output from the passive module can become misaligned due to hostile environment, thermal expansion, mechanical shock, local variations in the refractive index of the launch optics because of gamma and neutron radiation. The misalignment can be measured in two orthogonal directions: angular error lying on the scanning plane, angular error perpendicular to the scanning plane.

In case of error in the direction of the scan plane i.e. according to the x-axis of Figure 12, the profile peak due to the reflective vertical line corresponds to a predetermined value of the encoder of the scanning engines. If this value changes in subsequent scans, it means that a shift has taken place in accordance with that direction and, from the difference in values, it is geometrically possible to quantify the extent of the displacement.

The configuration of the scanning system with modified mirror-holder and with the same patterns that are used for the detection of the profiles can allow the assessment of the misalignment of the laser beams at the output of the passive module. In Figure 18, a configuration with two pattern inclined of $+\phi$ and $-\phi$. is shown. The red circle at the axes origin represents the aligned position of the beam. A misalignment **dx**, **dy** represented by the dashed red circle is supposed.

The translation of the laser beam along the x-axis will generate two profiles, in correspondence of the inclined white lines, as described previously. Let be:

- **xa1** the abscissa corresponding to the peak of the first profile in the case of initial and ideal (nominal) alignment,
- **xa2** the abscissa corresponding to the peak of the first profile in the case of initial and ideal (nominal) alignment,
- **xm1** the abscissa corresponding to the first profile peak in the case measured subsequently,
- **xm2** the abscissa corresponding to the second profile peak in the case measured subsequently.

The geometrical analysis of the problem allows, from the above values, to determine the displacements dx and dy according to the following relationships:

$$dx = \frac{1}{2}((xm1 + xm2) - (xa1 + xa2)) \qquad dy = \frac{1}{2}\big((xa2 - xa1) -$$

$$(xm2 - xm1)\big) Tan[\frac{\pi}{2} - \phi] \qquad\qquad (5)$$

The quantification of the misalignment will allow its correction by acting on the semi-reflecting mirror BS in the launch section through the feedback signal AllBS and/or possibly on the mirror M (Figure 8).

It is noted that the modified mirror holder PS with cooperative targets BC and SR simultaneously integrates all previously described calibration functions, allowing thus to control all critical system parameters which may vary due to hostile environments. This is also critical because it is typically very difficult or even impossible to be able to diagnose such parameters with external auxiliary devices in these conditions.

The present invention has been described for illustrative but not limitative purposes, according to its preferred embodiments, but it is to be understood that variations and/or modifications may be made by those skilled in the art without departing from the relative scope of protection, as defined by the appended claims.

**Claims**

1. An optical scanning apparatus for the scanning of one or more laser beams (11) on a remote target (T), for applications in hostile environments, said optical scanning apparatus comprising an active module (MA) and a passive module (MP), **characterized in that**:

   - said active module (MA) comprises one or more laser sources that produce said one or more laser beams (11), one or more detectors of light reflected by the remote target (T) when the latter is hit by said one or more laser beams (11), and an amplification and control electronics, and at least two electric motors driver (E);
   - said passive module (MP) comprises a section of collimation or focusing (Lfoc, TRfoc, BS, M, MR) of said one or more laser beams, in series with an optical scanning system (100) of said one or more laser beams (11) onto said remote target (T), as well as at least two electric motors powered by said at least two electric motors drivers, and a collection section (Lric, Tric) of said light reflected by said remote target (T), said collimation or focusing section and said collection section being placed in monostatic configuration;
- said active module and said passive module are remotely connected by wirings (CETR, ECB) comprising one or more single-mode optical fibers or photonic crystal fibers which connect said one or more laser sources to said launch section, at least one bundle of imaging fibers (BR) or GRIN fibers or low modal dispersion coefficient multimode fibers, which connect said collection section to said one or more detectors of reflected light, as well as electric cables (ECB) which connect said at least two electric motors drivers to the said at least two electric motors;

wherein the monostatic scanning optical system (100) comprises a first rotating element (18), on a first plane, moved by a pan motor and a second rotating element (17) on a second plane perpendicular to said first plane, moved by a tilt motor, wherein each of said first (18) and said second (17) rotating element comprise an encoder which are made of transparent-resistant glass, so as to allow them to adapt to said hostile environments, and wherein said first rotating element (18) has a central hole (30) for the input of said laser beam (11), to said first rotary element (18) being rigidly connected a rigid frame (20), which develops from said first plane in a extension direction perpendicular to said first plane, and to which the following are attached:

- a first reflective element (13) inclined with respect to said first plane and positioned so as to collect said laser beam (11) outgoing from said central hole (30) always at the same point during the rotation of the first rotating element (18);
- a second reflective element (14), inclined with respect to said first plane and outside the projection of said central hole (30) along said extension direction, the second reflective element (14) being positioned so as to collect said laser beam (11) after reflection on said first reflective element (13);
- a third reflective element (15), inclined with respect to said first plane and positioned above said second reflective element (14), in said extension direction, so as to collect said laser beam (11) after reflection on said second reflective element (14) and reflect it in a direction perpendicular to said second plane;

and wherein to said second rotating element (17) one fourth reflective element (16) is fixed, which is positioned so as to rotate around said perpendicular direction and to collect said laser beam (11) always at the same point once reflected by said third reflective element (15), said fourth reflective element (16) being configured to send said laser beam (11) toward the target parallelly to said second plane, thereby the fourth reflective element (16) being configured to collect the laser beam (12) returning from the target and to send it, by reflection on said third (15), second (14) and first (13) reflective element towards said central hole (30),
wherein said passive module (MP) comprises:

- a focus shifter (TRfoc) that receives a control signal from said active module (MA) and move said focusing system (Lfoc);
- a beam splitter (BS) placed at the exit of said focusing system (Lfoc);
- a bundle of fibers (BF) for imaging which collects the part of the light beam which is transmitted by the beam splitter (BS) and delivers it to said active module (MA);
- a mirror (M) which intercepts a part of the light beam deflected by said beam splitter (BS) and reflected it generating a reflected light beam (MR), said mirror having a first reflective face and a second face opposite to said first face;
- said optical scanning device (100) which scans said reflected light beam (MR) onto said target (T) ;
- a reception system (LRIC), facing towards said second face of the mirror (M), which focuses the light which is received from said target (T) onto a further imaging optical fibers bundle (BR) that carries the signal reflected from target (T) to said active module (MA) or, alternatively to the bundle, a low dispersion coefficient multimode optical fiber of the graded-index type or a photonic crystal fiber;
- a translator (Tric) of the receiving system (LRIC) which shifts said receiving system (LRIC) to focus the light on said imaging optical fibers bundle (BR),

and **in that** said active module (MA) comprises:

- a control electronics (E),
- a light beam source (L) which generates a light beam carried by a single-mode optical fiber (FSM) to said focusing system (Lfoc);
- a photo-detector (APD) that receives said further imaging optical fibers bundles (BR) and is connected to said electronic control unit (E);
- a light beam profilometer (BP) that receives said imaging optical fiber bundle (BF) and sends to said electronic control unit (E) a waist signal (Sbw) of the light beam transmitted by said beam splitter (BS);

a connection (CETR) between said electronic control unit (E) and said focusing translator (TRfoc), the connection being adapted to carry a control signal (STRfoc) .

2. Apparatus according to claim 1, **characterized in that** said collimation or focusing section (Lfoc, TRfoc, BS, M, MR) and said collection section (Lric, Tric) use optical configurations based on reflective elements being flat or curved mirrors only.

3. Apparatus according to claim 1, **characterized in that** said collimation or focusing section (Lfoc, TRfoc, BS, M, MR) and said collection section (LRIC, Tric) use optical configurations based only on lenses or on mixed configurations being lenses and flat or curved mirrors.

4. Apparatus according to any one of claims 1 to 3, **characterized in that** said first reflective element (13), said second reflective element (14) and said third reflective element (15) are inclined at 45° with respect to said first plane.

5. Apparatus according to any one of claims 1 to 4, **characterized in that** the reflective elements can be constituted by mirrors or other transparent optical elements, with metallic or dielectric coatings.

6. Apparatus according to any one of claims 1 to 5, **characterized in that** the shape of said first, second, third, fourth reflective element is circular or elliptical.

7. Apparatus according to any one of claims 1 to 6, **characterized by** the fact that the typical dimensions of said first, second, third and fourth reflective element range from 2 to 10 cm.

8. Apparatus according to any one of claims 1 to 7, **characterized in that** between said second and said third reflective element one or more further reflective elements are interposed which convey the laser beam (11) from the second to the third reflective element.

9. Apparatus according to any one of claims 1 to 8, **characterized in that** said tilt motor and pan motor are motors of the piezo-ceramic or magnetic or compressed gas type.

10. Apparatus according to any one of claims 1 to 8, **characterized in that** said central hole (30) has a diameter from 2 to 10 cm.

11. Apparatus according to claim 10, **characterized in that** said encoder can be optical, electrical, magnetic, depending on the environment of use and the type of application.

12. Apparatus according to claims 1 to 11, **characterized in that**:

- said first reflective element (13) includes a shaped mirror-holder support (PS) as a cylinder sector in whose surface a cooperative target is integrated (BC) which faces in the direction opposite to said first reflective element (13);
- said cooperative target (BC) has a width greater than the spot of said one or more laser beams,
- the center of the cylinder corresponds to the rotation center of the fourth reflective element (16), wherein said center of rotation is on the axis of the cylinder.

13. Apparatus according to claim 12, **characterized in that** said reflective element (13) includes in the support of the mirror-holder (PS) one or more further co-operative targets (SR) integrated in said cylinder surface and inclined with respect to the perpendicular section of said cylinder, in particular with an angle between 0 and 90 degrees.

14. Apparatus according to any one of claims 1 to 13, wherein said one or more beams are produced by incoherent laser radars, in particular AM amplitude modulation, or pulsed or frequency modulation FM laser radars, or by coherent laser radars, in particular FM laser radars or interferometer systems.

15. A calibration method of the remote target distance by measuring a reference distance, comprising the execution of the following steps:

- Providing the apparatus according to any one of claims 12 or 13, with mirrors as reflective elements;

A. scanning said one or more laser beams onto said remote target (T);
B. acquiring the time of flight of said one or more laser beams from said collimation or focusing section to said receiving section through reflection on said remote target (T);
C. directing said fourth mirror (16) towards the said cooperative target (BC) and measuring the distance from said cylinder center to said cooperative target (BC);
D. Repeating steps A and C by performing a self-calibration of the apparatus as a function of the difference between said distance measured in step C and the nominal distance from said cylinder center to said cooperative target (BC).

16. Method for the calibration of the reflectivity of a remote target, comprising the execution of the following stages:

- Providing the apparatus according to any one of claims 12 or 13, with mirrors as reflective elements;

A. scanning said one or more laser beams onto said remote target (T);
B. acquiring the reflectivity of said one or more laser beams from said collimation or focusing section to said receiving section through reflection on said remote target (T);
C. directing said fourth mirror (16) towards the said cooperative target (BC) and measuring the reflectivity of said cooperative target (BC);
D. Repeating steps A and C by performing a self-calibration of the apparatus as a function of the difference between said reflectivity measured in step C and a nominal reflectivity of said cooperative target (BC) .

17. Method for acquisition of one or more optical power profiles of one or more laser beams sent onto the remote target (T), comprising the execution of the following steps:

- Providing the apparatus according to claim 13, with mirrors as reflective elements;

A. scanning said one or more laser beams onto said remote target (T);
B. acquiring the reflectivity of said one or more laser beams from said collimation or focusing section to said receiving section through reflection on said remote target (T);
C. directing said fourth mirror (16) towards said one or more additional co-operative targets (SR) in order to scan them, and measuring the optical power of said one or more further co-operative targets (SR), thus acquiring said one or more profiles;
D. repeating steps A to C by performing a self-calibration of the apparatus as a function of the difference between said one or more profiles and respective one or more pre-determined nominal profiles.

18. Method for correction of systematic errors in the focusing of one or more laser beams onto a remote target (T), including the execution of the following stages:

- Providing the apparatus according to claim 13, wherein said further one or more cooperative targets (SR) are one or more elongated stripes along a direction with a width h perpendicular to said direction;
- Calculating a look-up table that provides the measurement error of the optical power profile of said one or more laser beams when scanned onto said one or more additional co-operative targets (SR), the error being theoretically calculated as the difference between a nominal optical power $I_x (X)$ on an elongated strip of infinitesimal width:

$$I_x(x) = I_1\, e^{-\frac{2x^2}{w_z{}^2}}$$

wherein $I_1 = I_0 \sqrt{\frac{\pi}{2}}\, w_z \mathrm{Erf}\big(2\sqrt{2}\, w_z\big)$ and $\mathrm{Erf}(z) = \frac{2}{\sqrt{\pi}} \int_0^z e^{-t^2} dt$ , in which $w_z$ represents the radius of the section of the beam when the intensity is reduced to $1/e^2$, and $x$ is the coordinate of the laser beam

displacement, $I_0$ is the peak power;

and the optical power $I'_x$ *(x1)* calculated on a strip with finite width *h*:

$$I'_x(x1) = \int_{-\infty}^{\infty} H\left(x + \frac{h}{2}\right) H\left(x - \frac{h}{2}\right) I_1 \, e^{-\frac{2(x1-x)^2}{w_z^2}} \, dx = \frac{1}{2} I_1 \sqrt{\frac{\pi}{2}} \, w_z \left(\text{Erf}\left[\frac{h-2\,x1}{\sqrt{2}w_z}\right] + \right.$$

$$\left. \text{Erf}\left[\frac{h+2\,x1}{\sqrt{2}w_z}\right]\right) H[h]$$

wherein *H* is the Heaviside function, and *x1* is again the coordinate of the laser beam displacement;
- Executing the method according to claim 17, obtaining said one or more measured profiles;
- Self-calibrating the focusing or collimation of said one or more laser beams on said remote target (T) as a function of said one or more measured profiles and of said look-up table.

**19.** Method for correction of errors of alignment of one or more laser beams sent onto a remote target (T), including the execution of the following steps:

- Providing the apparatus according to claim 13, wherein said tilt motor is provided with an encoder, and wherein said further one or more cooperative targets (SR) are one or more elongated stripes, which are elongated along a direction having a width h perpendicularly to said direction;
- Performing the method of claim 17, obtaining at least two profiles which are measured with respect to at least two respective further co-operative targets (SR) inclined at two exactly opposite angles $\phi$, $-\phi$;
- Identifying the coordinates of the peaks of said one or more profiles measured by said encoder;
- Calculating the misalignment *dx, dy* along two respective coordinates *x* and *y* on the target as:

$$dx = \frac{1}{2}((xm1 + xm2) - (xa1 + xa2)) \qquad dy = \frac{1}{2}\big((xa2 - xa1) -$$

$$(xm2 - xm1)\big) \, Tan[\frac{\pi}{2} - \phi]$$

in which *xm1* and *xm2* are the coordinates of two peaks of the profiles as measured in correspondence with two of said at least two additional co-operative targets (SR), and **xa2, xa1** are the nominal values of these two peaks, the nominal values being pre-determined in optimum alignment conditions;
- Self-calibrating the alignment of said one or more laser beams (AllBs), the beam splitter (BS) and/or the mirror (M) as a function of said misalignment *dx, dy*.

**20.** Method for the correction of focusing of one or more laser beams diffused by a remote target (T), comprising the execution of the following stages:

- Providing the apparatus according to any one of claims 1 to 14, wherein, outside said bundle (BR) of imaging fibers or GRIN multimode fibers or low modal dispersion coefficient multimode fibers, a plurality of individual multimode fibers, for example with a diameter of the order of 30-100 microns, with pre-determined position and corresponding detectors (DET) in said active module are provided;
- Acquiring, by said corresponding detectors (DET), a plurality of signals (DEF) from said plurality of individual multimode fibers;
- If at least one of said plurality of signals (DEF) is above a pre-determined threshold, moving (TRIC) said collecting section (LRIC) to minimize said at least a signal.

**Patentansprüche**

**1.** Optische Scan-Einrichtung für das Scannen eines oder mehrerer Laserstrahlen (11) an einem entfernten Ziel (T), für Anwendungen in aggressiven Umgebungen, wobei die optische Scan-Einrichtung ein aktives Modul (MA) und ein passives Modul (MP) umfasst, **dadurch gekennzeichnet, dass**:

- das aktive Modul (MA) eine oder mehrere Laserquellen umfasst, die den einen oder die mehreren Laserstrahlen (11) erzeugen, einen oder mehrere Detektoren von Licht, das vom entfernten Ziel (T) reflektiert wird, wenn das letztere von dem einen oder den mehreren Laserstrahlen (11) getroffen wird, und eine Verstärkungs- und Steuerelektronik und mindestens zwei Elektromotorantriebe (E);

- das passive Modul (MP) einen Abschnitt der Kollimation oder Fokussierung (Lfoc, TRfoc, BS, M, MR) des einen oder der mehreren Laserstrahlen umfasst, in Reihe mit einem optischen Scansystem (100) des einen oder der mehreren Laserstrahlen (11) auf das entfernte Ziel (T), sowie mindestens zwei Elektromotoren, die von den mindestens zwei Elektromotorantrieben mit Energie versorgt werden, und einen Sammelabschnitt (Lric, Tric) des vom entfernten Ziel (T) reflektierten Lichts, wobei der Kollimations- oder Fokussierungsabschnitt und der Sammelabschnitt in monostatischer Konfiguration platziert sind;

- wobei das aktive Modul und das passive Modul durch Verdrahtungen (CETR, ECB) entfernt verbunden sind, umfassend eine oder mehrere Einzelmodus-Glasfasern oder photonische Kristallfasern, die die eine oder die mehreren Laserquellen mit dem Startabschnitt verbinden, mindestens ein Bündel von Bildgebungsfasern (BR) oder GRIN-Fasern oder Multimodusfasern mit niedrigem modalem Dispersionskoeffizienten, die den Sammelabschnitt mit dem einen oder den mehreren Detektoren von reflektiertem Licht verbinden, sowie elektrische Kabel (ECB), die die mindestens zwei Elektromotorantriebe mit den mindestens zwei Elektromotoren verbinden; wobei das monostatische optische Scansystem (100) ein erstes Drehelement (18) umfasst, auf einer ersten Ebene, bewegt von einem Schwenkmotor, und ein zweites Drehelement (17) auf einer zweiten Ebene senkrecht zur ersten Ebene, bewegt von einem Neigungsmotor, wobei jedes von dem ersten (18) und dem zweiten (17) Drehelement einen Encoder umfasst, die aus durchsichtig-widerstandsfähigem Glas gefertigt sind, um ihnen zu ermöglichen, sich an die aggressiven Umgebungen anzupassen, und wobei das erste Drehelement (18) eine mittlere Öffnung (30) für die Eingabe des Laserstrahls (11) aufweist, zum ersten Drehelement (18), das fest mit einem festen Rahmen (20) verbunden ist, der sich aus der ersten Ebene in eine Verlängerungsrichtung senkrecht zur ersten Ebene entwickelt und an dem das Folgende befestigt ist:

- ein erstes reflektierendes Element (13), in Bezug auf die erste Ebene geneigt und derart positioniert, dass es den aus der mittleren Öffnung (30) heraustretenden Laserstrahl (11) immer am selben Punkt während der Drehung des ersten Drehelements (18) sammelt;

- ein zweites reflektierendes Element (14), in Bezug auf die erste Ebene geneigt und außerhalb der Projektion der mittleren Öffnung (30) entlang der Verlängerungsrichtung, wobei das zweite reflektierende Element (14) derart positioniert ist, dass es den Laserstrahl (11) nach Reflexion auf das erste reflektierende Element (13) sammelt;

- ein drittes reflektierendes Element (15), in Bezug auf die erste Ebene geneigt und über dem zweiten reflektierenden Element (14) positioniert, in der Verlängerungsrichtung, derart, dass es den Laserstrahl (11) nach Reflexion auf das zweite reflektierende Element (14) sammelt und ihn in eine Richtung senkrecht zur zweiten Ebene reflektiert;

und wobei an das zweite Drehelement (17) ein viertes reflektierendes Element (16) fixiert ist, das derart positioniert ist, dass es sich um die senkrechte Richtung dreht und den Laserstrahl (11) nach Reflexion von dem dritten reflektierenden Element (15) immer am selben Punkt sammelt, wobei das vierte reflektierende Element (16) konfiguriert ist, um den Laserstrahl (11) zu dem Ziel parallel zur zweiten Ebene zu senden, wodurch das vierte reflektierende Element (16) konfiguriert ist, den Laserstrahl (12) zu sammeln, der von dem Ziel zurückkehrt, und ihn durch Reflexion auf das dritte (15), zweite (14) und erste (13) reflektierende Element zur mittleren Öffnung (30) zu senden, wobei das passive Modul (MP) umfasst:

- einen Fokusverlagerer (TRfoc), der ein Steuersignal vom aktiven Modul (MA) empfängt und das Fokussierungssystem (Lfoc) bewegt;

- einen Strahlteiler (BS), der am Ausgang des Fokussierungssystems (Lfoc) platziert ist;

- ein Faserbündel (BF) zur Bildgebung, das den Teil des Laserstrahls sammelt, der vom Strahlteiler (BS) übertragen wird, und ihn an das aktive Modul (MA) übergibt;

- einen Spiegel (M), der einen Teil des Lichtstrahls auffängt, der vom Strahlteiler (BS) umgelenkt wird, und reflektiert es, einen reflektierten Lichtstrahl (MR) erzeugend, wobei der Spiegel eine erste reflektierende Seite und eine zweite reflektierende Seite entgegengesetzt zur ersten Seite aufweist;

- die optische Scan-Vorrichtung (100), die den reflektierten Lichtstrahl (MR) auf das Ziel (T) scannt;

- ein Empfangssystem (LRIC), der zweiten Seite des Spiegels (M) zugewandt, das das vom Ziel (T) empfangene Licht auf ein weiteres optisches Bildgebungsglasfaserbündel (BR) fokussiert, das das vom Ziel (T) reflektierte Signal zum aktiven Modul (MA) trägt, oder alternativ zum Bündel, einem Multimodusfaser mit niedrigem modalem Dispersionskoeffizienten vom Gradientenindextyp oder einer photonischen Kristallfaser;

- einen Übersetzer (Tric) des Empfangssystems (LRIC), der das Empfangssystem (LRIC) verlagert, um das Licht auf das optische Bildgebungsglasfaserbündel (BR) zu fokussieren;

und dadurch, dass das aktive Modul (MA) umfasst:

- eine Steuerelektronik (E);
- eine Lichtstrahlquelle (L), die einen Lichtstrahl erzeugt, der von einer Einzelmodus-Glasfaser (FSM) zum Fokussierungssystem (Lfoc) getragen wird;
- einen Photo-Detektor (APD), der die weiteren optischen Bildgebungsglasfaserbündel (BR) empfängt und mit der elektronischen Steuereinheit (E) verbunden ist;
- einen Lichtstrahl-Profilometer (BP), der das optische Bildgebungsglasfaserbündel (BF) empfängt und an die elektronische Steuereinheit (E) ein Taillensignal (Sbw) des vom Strahlteiler (BS) übertragenen Lichtstrahls sendet;

eine Verbindung (CETR) zwischen der elektronischen Steuereinheit (E) und dem Fokussierungsübersetzer (TRfoc), wobei die Verbindung angepasst ist, um ein Steuersignal (STRfoc) zu tragen.

2. Einrichtung nach Anspruch 1, **dadurch gekennzeichnet, dass** der Kollimations- oder Fokussierungsabschnitt (Lfoc, TRfoc, BS, M, MR) und der Sammelabschnitt (Lric, Tric) optische Konfigurationen verwenden, die darauf basieren, dass reflektierende Elemente nur flache oder gekrümmte Spiegel sind.

3. Einrichtung nach Anspruch 1, **dadurch gekennzeichnet, dass** der Kollimations- oder Fokussierungsabschnitt (Lfoc, TRfoc, BS, M, MR) und der Sammelabschnitt (LRIC, TRIC) optische Konfigurationen verwenden, die nur auf Linsen basieren, oder darauf, dass Mischkonfigurationen Linsen und flache oder gekrümmte Spiegel sind.

4. Einrichtung nach einem der Ansprüche 1 bis 3, **dadurch gekennzeichnet, dass** das erste reflektierende Element (13), das zweite reflektierende Element (14) und das dritte reflektierende Element (15) in Bezug auf die erste Ebene um 45 ° geneigt sind.

5. Einrichtung nach einem der Ansprüche 1 bis 4, **dadurch gekennzeichnet, dass** die reflektierenden Elemente durch Spiegel oder andere durchsichtige optische Elemente, mit metallischen oder dielektrischen Beschichtungen, zusammengesetzt sein können.

6. Einrichtung nach einem der Ansprüche 1 bis 5, **dadurch gekennzeichnet, dass** die Form des ersten, zweiten, dritten, vierten reflektierenden Elements kreisförmig oder elliptisch ist.

7. Einrichtung nach einem der Ansprüche 1 bis 6, **gekennzeichnet durch** die Tatsache, dass die typischen Abmessungen des ersten, zweiten, dritten und vierten reflektierenden Elements von 2 bis 10 cm reichen.

8. Einrichtung nach einem der Ansprüche 1 bis 7, **dadurch gekennzeichnet, dass** zwischen dem zweiten und dem dritten reflektierenden Element ein oder mehrere weitere reflektierende Elemente eingefügt sind, die den Laserstrahl (11) vom zweiten zum dritten reflektierenden Element weiterleiten.

9. Einrichtung nach einem der Ansprüche 1 bis 8, **dadurch gekennzeichnet, dass** der Neigungsmotor und Schwankmotor Motoren vom piezokeramischen oder magnetischen oder Druckgastyp sind.

10. Einrichtung nach einem der Ansprüche 1 bis 8, **dadurch gekennzeichnet, dass** die mittlere Öffnung (30) einen Durchmesser von 2 bis 10 cm aufweist.

11. Einrichtung nach Anspruch 10, **dadurch gekennzeichnet, dass** der Encoder optisch, elektrisch, magnetisch sein kann, abhängig von der Verwendungsumgebung und dem Anwendungstyp.

12. Einrichtung nach Ansprüchen 1 bis 11, **dadurch gekennzeichnet, dass**:

- das erste reflektierende Element (13) eine geformte Spiegelhalterstütze (PS) als einen Zylindersektor einschließt, in deren Oberfläche ein gemeinsames Ziel eingebaut (BC) ist, das der Richtung entgegengesetzt zum ersten reflektierenden Element (13) zugewandt ist;
- das gemeinsame Ziel (BC) eine Breite aufweist, die größer ist als der Leuchtfleck des einen oder der mehreren Laserstrahlen,

- der Mittelpunkt des Zylinders dem Drehmittelpunkt des vierten reflektierenden Elements (16) entspricht, wobei der Drehmittelpunt auf der Zylinderachse liegt.

13. Einrichtung nach Anspruch 12, **dadurch gekennzeichnet, dass** das reflektierende Element (13) in der Stütze des Spiegelhalters (PS) ein oder mehrere weitere gemeinsame Ziele (SR) einschließt, die in die Zylinderoberfläche eingebaut sind und in Bezug auf den senkrechten Abschnitt des Zylinders geneigt sind, insbesondere mit einem Winkel zwischen 0 und 90 Grad.

14. Einrichtung nach einem der Ansprüche 1 bis 13, wobei der eine oder die mehreren Strahlen durch inkohärente Laserradare erzeugt werden, insbesondere AM-Amplitudenmodulation, oder gepulste oder Frequenzmodulations-FM-Laserradare, oder durch kohärente Laserradare, insbesondere FM-Laserradare oder Interferometersysteme.

15. Kalibrierungsverfahren des Abstands des entfernten Ziels durch Messen eines Referenzabstands, umfassend die Ausführung der folgenden Schritte:

   - Bereitstellen der Einrichtung nach einem der Ansprüche 12 oder 13, mit Spiegeln als reflektierenden Elementen;

   A. Scannen des einen oder der mehreren Laserstrahlen auf das entfernte Ziel (T);
   B. Erfassen der Flugzeit des einen oder der mehreren Laserstrahlen vom Kollimations- oder Fokussierungsabschnitt zum Empfangsabschnitt durch Reflexion auf das entfernte Ziel (T);
   C. Richten des vierten Spiegels (16) auf das gemeinsame Ziel (BC) und Messen des Abstands vom Zylindermittelpunkt zum gemeinsamen Ziel (BC);
   D. Wiederholen von Schritten A und C durch Durchführen einer Eigenkalibrierung der Einrichtung als eine Funktion der Differenz zwischen dem in Schritt C gemessenen Abstand und dem nominalen Abstand vom Zylindermittelpunkt zum gemeinsamen Ziel (BC).

16. Verfahren zum Kalibieren der Reflektivität eines entfernten Ziels, umfassend die Ausführung der folgenden Stufen:

   - Bereitstellen der Einrichtung nach einem der Ansprüche 12 oder 13, mit Spiegeln als reflektierenden Elementen;

   A. Scannen des einen oder der mehreren Laserstrahlen auf das entfernte Ziel (T);
   B. Erfassen der Reflektivität des einen oder der mehreren Laserstrahlen vom Kollimations- oder Fokussierungsabschnitt zum Empfangsabschnitt durch Reflexion auf das entfernte Ziel (T);
   C. Richten des vierten Spiegels (16) auf das gemeinsame Ziel (BC) und Messen der Reflektivität des gemeinsamen Ziels (BC);
   D. Wiederholen von Schritten A und C durch Durchführen einer Eigenkalibrierung der Einrichtung als eine Funktion der Differenz zwischen der in Schritt C gemessenen Reflektivität und einer nominalen Reflektivität des gemeinsamen Ziels (BC).

17. Verfahren zum Erfassen einer oder mehrerer optischer Leistungsprofile von einem oder mehreren auf das entfernte Ziel (T) gesendeten Laserstrahlen, umfassend die Ausführung der folgenden Schritte:

   - Bereitstellen der Einrichtung nach Anspruch 13, mit Spiegeln als reflektierenden Elementen;

   A. Scannen des einen oder der mehreren Laserstrahlen auf das entfernte Ziel (T);
   B. Erfassen der Reflektivität des einen oder der mehreren Laserstrahlen vom Kollimations- oder Fokussierungsabschnitt zum Empfangsabschnitt durch Reflexion auf das entfernte Ziel (T);
   C. Richten des vierten Spiegels (16) auf das eine oder die mehreren zusätzlichen gemeinsamen Ziele (SR), um diese zu scannen, und messen der optischen Leistung des einen oder der mehreren gemeinsamen Ziele (SR), somit Erfassen des einen oder der mehreren Profile;
   D. Wiederholen von Schritten A und C durch Durchführen einer Eigenkalibrierung der Einrichtung als eine Funktion der Differenz zwischen dem einen oder den mehreren Profilen und entsprechenden einen oder mehreren vorbestimmten nominalen Profilen.

18. Verfahren zur Korrektur systematischer Fehler bei der Fokussierung eines oder mehrerer Laserstrahlen auf ein entferntes Ziel (T), einschließlich der Ausführung der folgenden Stufen:

   - Bereitstellen der Einrichtung nach Anspruch 13, wobei das eine weitere oder die mehreren weiteren gemeinsamen Ziele (SR) ein oder mehrere längliche Streifen entlang einer Richtung mit einer Breite h senkrecht zur Richtung sind;

- Berechnen einer Nachschlagetabelle, die den Messfehler des optischen Leistungsprofils des einen oder der mehreren Laserstrahlen bei Scannen auf das eine oder die mehreren zusätzlichen gemeinsamen Ziele (SR) bereitstellt, wobei der Fehler theoretisch berechnet wird als die Differenz zwischen einer nominalen optischen Leistung *Ix(X)* an einem länglichen Streifen mit unendlicher Breite:

$$I_x(X) \;=\; I_1 e^{-\frac{2x^2}{w_z^2}}$$

wobei $I_1 \;=\; I_0 \sqrt{\frac{\pi}{2}}\, w_z\, Erf(2\sqrt{2}\, w_z)$ und $Erf(z) = \frac{2}{\sqrt{\pi}} \int_0^z e^{-t^2}\, dt$, bei dem $w_z$ den Radius des Abschnitt des Strahls darstellt, wenn die Intensität auf **1/e²** reduziert wird, und *x* die Koordinate der Laserstrahlverlagerung ist, *I₀* die Spitzenleistung ist;

und die optische Leistung *I'x (x1)* an einem Streifen mit endlicher Breite **h** berechnet wird als:

$$I'_x(x1) = \int_{-\infty}^{\infty} H\left(x+\frac{h}{2}\right) H\left(x-\frac{h}{2}\right) I_1\, e^{-\frac{2(x1-x)^2}{w_z^2}}\, dx = \frac{1}{2} I_1 \sqrt{\frac{\pi}{2}} W_z \left( \text{Erf}\left[\frac{h-2\,x1}{\sqrt{2}W_z}\right] + \right.$$

$$\left. \text{Erf}\left[\frac{h+2\,x1}{\sqrt{2}W_z}\right] \right) H[h]$$

wobei **H** die Heaviside-Funktion ist, und *x1* wieder die Koordinate der Laserstrahlverlagerung ist;

- Ausführen des Verfahrens nach Anspruch 17, Erhalten des einen oder der mehreren gemessenen Profile;
- Eigenkalibrierung der Fokussierung oder Kollimation des einen oder der mehreren Laserstrahlen auf das entfernte Ziel (T) als eine Funktion des einen oder der mehreren gemessenen Profile und der Nachschlagetabelle.

19. Verfahren zur Korrektur von Ausrichtungsfehlern eines oder mehrerer Laserstrahlen, die auf das entfernte Ziel (T) gesendet werden, einschließlich der Ausführung der folgenden Schritte:

- Bereitstellen der Einrichtung nach Anspruch 13, wobei der Neigungsmotor mit einem Encoder bereitgestellt wird und wobei das eine weitere oder die mehreren weiteren gemeinsamen Ziele (SR) ein oder mehrere längliche Streifen sind, die in eine Richtung langezogen werden, die eine Breite h senkrecht zur Richtung aufweisen;
- Durchführung des Verfahrens von Anspruch 17, Erhalten von mindestens zwei Profilen, die in Bezug auf mindestens zwei entsprechende weitere gemeinsame Ziele (SR) an zwei genau entgegengesetzten Winkeln, *Φ, -Φ,* geneigt gemessen werden;
- Identifizieren der Koordinaten der Spitzen des einen oder der mehreren vom Encoder gemessenen Profile;
- Berechnen der Fehlausrichtung *dx, dy* entlang von zwei entsprechenden Koordinaten x und y auf dem Ziel als:

$$dx = \frac{1}{2}\big((xm1 + xm2) - (xa1 + xa2)\big)$$

$$dy = \frac{1}{2}\big((xa2 - xa1) - (xm2 - xm1)\big) Tan\left[\frac{\pi}{2} - \Phi\right]$$

bei dem *xm1* und *xm2* die Koordinaten von zwei Spitzen der Profile sind, gemäß zwei der mindestens zwei zusätzlichen gemeinsamen Ziele (SR) gemessen, und *xα2, xα1* die nominalen Werte dieser zwei Spitzen sind, wobei die nominalen Wert unter optimalen Ausrichtungsbedingungen vorbestimmt werden;

- Eigenkalibrierung der Ausrichtung des einen oder der mehreren Laserstrahlen (A11Bs), des Laserteilers (BS) und/oder des Spiegels (M) als eine Funktion der Fehlausrichtung *dx, dy.*

**20.** Verfahren zur Korrektur von Fokussierung eines oder mehrerer Laserstrahlen, die von einem entfernten Ziel (T) gestreut werden, umfassend die Ausführung der folgenden Stufen:

- Bereitstellen der Einrichtung nach einem der Ansprüche 1 bis 14, wobei außerhalb des Bündels (BR) von Bildgebungsfasern oder GRIN-Multimodusfasern oder Multimodusfasern mit niedrigem modalem Dispersionskoeffizienten eine Vielzahl von einzelnen Multimodusfasern, zum Beispiel mit einem Durchmesser in der Größenordnung von 30 - 100 Mikron, mit vorbestimmter Position und entsprechenden Detektoren (DET) im aktiven Modul bereitgestellt werden;
- Erfassen, durch die entsprechenden Detektoren (DET), einer Vielzahl von Signalen (DEF) aus der Vielzahl von individuellen Multimodusfasern;
- wenn mindestens eines der Vielzahl von Signalen (DEF) über einer vorbestimmten Schwelle liegt, Bewegen (TRIC) des Sammelabschnitts (LRIC), um mindestens ein Signal zu minimieren.

**Revendications**

**1.** Appareil de balayage optique pour le balayage d'un ou plusieurs faisceaux laser (11) sur une cible distante (T), pour des applications dans des environnements hostiles, ledit appareil de balayage optique comprenant un module actif (MA) et un module passif (MP), **caractérisé en ce que** :

- ledit module actif (MA) comprend une ou plusieurs sources laser qui produisent lesdits un ou plusieurs faisceaux laser (11), un ou plusieurs détecteurs de lumière réfléchie par la cible distante (T) lorsque cette dernière est atteinte par lesdits un ou plusieurs faisceaux laser (11), et une électronique d'amplification et de commande, et au moins deux dispositifs d'entraînement de moteurs électriques (E) ;
- ledit module passif (MP) comprend une section de collimation ou de focalisation (Lfoc, TRfoc, BS, M, MR) desdits un ou plusieurs faisceaux laser, en série avec un système de balayage optique (100) desdits un ou plusieurs faisceaux laser (11) sur la cible distante (T), ainsi que au moins deux moteurs électriques alimentés par lesdits au moins deux dispositifs d'entraînement de moteurs électriques, et une section de collecte (Lric, Tric) de ladite lumière réfléchie par ladite cible distante (T), ladite section de collimation ou de focalisation et ladite section de collecte étant placées dans une configuration monostatique ;
- ledit module actif et ledit module passif sont connectés à distance par des câblages (CETR, ECB) comprenant une ou plusieurs fibres optiques monomodes ou fibres à cristal photonique qui connectent lesdites une ou plusieurs sources laser à ladite section de lancement, au moins un faisceau de fibres d'imagerie (BR) ou de fibres GRIN ou de fibres multimodes à faible coefficient de dispersion modale, qui connectent ladite section de collecte auxdits un ou plusieurs détecteurs de lumière réfléchie, ainsi que des câbles électriques (ECB) qui connectent lesdits au moins deux dispositifs d'entraînement de moteurs électriques auxdits au moins deux moteurs électriques ;
dans lequel le système optique de balayage monostatique (100) comprend un premier élément rotatif (18), sur un premier plan, déplacé par un moteur avec fonction panoramique, et un second élément rotatif (17) sur un second plan perpendiculaire audit premier plan, déplacé par un moteur avec fonction d'inclinaison, dans lequel chacun dudit premier (18) et dudit second (17) élément rotatif comprend un codeur réalisé en verre transparent-résistant, afin de leur permettre de s'adapter auxdits environnements hostiles, et dans lequel ledit premier élément rotatif (18) présente un trou central (30) pour l'entrée dudit faisceau laser (11), vers ledit premier élément rotatif (18) qui est connecté de manière rigide à un châssis rigide (20), qui se développe à partir dudit premier plan dans une direction d'extension perpendiculaire audit premier plan, et auquel est attaché ce qui suit :
- un premier élément réfléchissant (13) incliné par rapport audit premier plan et positionné de façon à collecter ledit faisceau laser (11) sortant dudit trou central (30) toujours au même point pendant la rotation du premier élément rotatif (18) ;
- un deuxième élément réfléchissant (14), incliné par rapport audit premier plan et à l'extérieur de la projection dudit trou central (30) le long de ladite direction d'extension, le deuxième élément réfléchissant (14) étant positionné de façon à collecter ledit faisceau laser (11) après réflexion sur ledit premier élément réfléchissant (13) ;
- un troisième élément réfléchissant (15), incliné par rapport audit premier plan et positionné au-dessus dudit deuxième élément réfléchissant (14), dans ladite direction d'extension, de façon à collecter ledit faisceau laser (11) après réflexion sur ledit deuxième élément réfléchissant (14) et à le réfléchir dans une direction perpendiculaire audit second plan;

et dans lequel audit second élément rotatif (17) un quatrième élément réfléchissant (16) est fixé, qui est positionné

EP 3 465 270 B1

de façon à pivoter autour de ladite direction perpendiculaire et à collecter ledit faisceau laser (11) toujours au même point, une fois réfléchi par ledit troisième élément réfléchissant (15), ledit quatrième élément réfléchissant (16) étant configuré pour envoyer ledit faisceau laser (11) vers la cible parallèlement audit second plan, le quatrième élément réfléchissant (16) étant configuré par ce moyen pour collecter le faisceau laser (12) revenant de la cible et pour l'envoyer, par réflexion sur ledit troisième (15), deuxième (14) et premier (13) élément réfléchissant, vers ledit trou central (30) ;

dans lequel ledit module passif (MP) comprend :

- un dispositif de déplacement de foyer (TRfoc) qui reçoit un signal de commande dudit module actif (MA) et déplace ledit système de focalisation (Lfoc) ;
- un séparateur de faisceau (BS) placé à la sortie dudit système de focalisation (Lfoc) ;
- un faisceau de fibres (BF) pour imagerie qui collecte la partie du faisceau lumineux qui est transmise par le séparateur de faisceau (BS) et le délivre audit module actif (MA) ;
- un miroir (M) qui intercepte une partie du faisceau lumineux dévié par ledit séparateur de faisceau (BS) et le réfléchit en générant un faisceau lumineux réfléchi (MR), ledit miroir présentant une première face réfléchissante et une seconde face opposée à ladite première face :
- ledit dispositif de balayage optique (100) qui balaie ledit faisceau lumineux réfléchi (MR) sur ladite cible (T) ;
- un système de réception (LRIC), faisant face à ladite seconde face du miroir (M), qui concentre la lumière qui est reçue de ladite cible (T) sur un autre faisceau de fibres optiques d'imagerie (BR) qui transporte le signal réfléchi provenant de la cible (T) vers ledit module actif (MA) ou, en variante, vers le faisceau, une fibre optique multimode à faible coefficient de dispersion du type à gradient d'indice ou une fibre à cristal photonique ;
- un translateur (Tric) du système récepteur (LRIC) qui déplace ledit système récepteur (LRIC) pour concentrer la lumière sur ledit faisceau de fibres optiques d'imagerie (BR),

et **en ce que** ledit module actif (MA) comprend :

- une électronique de commande (E) ;
- une source de faisceau lumineux (L) qui génère un faisceau lumineux transporté par une fibre optique monomode (FSM) vers ledit système de focalisation (Lfoc) ;
- un photodétecteur (APD) qui reçoit lesdits autres faisceaux de fibres optiques d'imagerie (BR) et est connecté à ladite unité de commande électronique (E) ;
- un profilomètre de faisceau lumineux (BP) qui reçoit ledit faisceau de fibre optique d'imagerie (BF) et envoie à ladite unité de commande électronique (E) un signal étranglé (Sbw) du faisceau lumineux transmis par ledit séparateur de faisceau (BS) ;

une connexion (CETR) entre ladite unité de commande électronique (E) et ledit translateur de focalisation (TRfoc), la connexion étant adaptée pour transporter un signal de commande (STRfoc).

2. Appareil selon la revendication 1, **caractérisé en ce que** ladite section de collimation ou de focalisation (Lfoc, TRfoc, BS, M, MR) et ladite section de collecte (Lric, Tric) utilisent des configurations optiques basées sur des éléments réfléchissants qui sont uniquement des miroirs plats ou courbes.

3. Appareil selon la revendication 1, **caractérisé en ce que** ladite section de collimation ou de focalisation (Lfoc, TRfoc, BS, M, MR) et ladite section de collecte (LRIC, Tric) utilisent des configurations optiques basées uniquement sur des lentilles ou sur des configurations mixtes qui sont des lentilles et des miroirs plats ou courbes.

4. Appareil selon l'une quelconque des revendications 1 à 3, **caractérisé en ce que** ledit premier élément réfléchissant (13), ledit deuxième élément réfléchissant (14) et ledit troisième élément réfléchissant (15) sont inclinés à 45° par rapport audit premier plan.

5. Appareil selon l'une quelconque des revendications 1 à 4, **caractérisé en ce que** les éléments réfléchissants peuvent être constitués par des miroirs ou d'autres éléments optiques transparents, avec des revêtements métalliques ou diélectriques.

6. Appareil selon l'une quelconque des revendications 1 à 5, **caractérisé en ce que** la forme dudit premier, deuxième, troisième, quatrième élément réfléchissant est circulaire ou elliptique.

7. Appareil selon l'une quelconque des revendications 1 à 6, **caractérisé par le fait que** les dimensions typiques dudit premier, deuxième, troisième et quatrième élément réfléchissant sont comprises entre 2 et 10 cm.

8. Appareil selon l'une quelconque des revendications 1 à 7, **caractérisé en ce qu'**entre ledit second et ledit troisième élément réfléchissant un ou plusieurs éléments réfléchissants supplémentaires sont interposés qui acheminent le faisceau laser (11) depuis le second vers le troisième élément réfléchissant.

9. Appareil selon l'une quelconque des revendications 1 à 8, **caractérisé en ce que** lesdits moteur avec fonction d'inclinaison et moteur avec fonction panoramique sont des moteurs du type piézocéramique ou magnétique ou à gaz comprimé.

10. Appareil selon l'une quelconque des revendications 1 à 8, **caractérisé en ce que** ledit trou central (30) présente un diamètre de 2 à 10 cm.

11. Appareil selon la revendication 10, **caractérisé en ce que** ledit codeur peut être optique, électrique, magnétique, en fonction de l'environnement d'utilisation et du type d'application.

12. Appareil selon les revendications 1 à 11, **caractérisé en ce que** :

   - ledit premier élément réfléchissant (13) inclut un support porte-miroir (PS) conformé sous la forme d'un secteur de cylindre dans la surface duquel une cible coopérative est intégrée (BC) qui fait face à la direction opposée audit premier élément réfléchissant (13) ;
   - ladite cible coopérative (BC) présente une largeur plus grande que celle du spot desdits un ou plusieurs faisceaux laser ;
   - le centre du cylindre correspond au centre de rotation du quatrième élément réfléchissant (16), dans lequel ledit centre de rotation se trouve sur l'axe du cylindre.

13. Appareil selon la revendication 12, **caractérisé en ce que** ledit élément réfléchissant (13) inclut dans le support du porte-miroir (PS) une ou plusieurs cibles coopératives supplémentaires (SR) intégrées dans ladite surface de cylindre et inclinées par rapport à la section perpendiculaire dudit cylindre, en particulier avec un angle compris entre 0 et 90 degrés.

14. Appareil selon l'une quelconque des revendications 1 à 13, dans lequel lesdits un ou plusieurs faisceaux sont produits par des radars laser incohérents, en particulier des radars laser à modulation d'amplitude AM, ou à modulation impulsionnelle ou de fréquence FM, ou par des radars laser cohérents, en particulier des radars laser FM ou des systèmes d'interféromètre.

15. Procédé d'étalonnage de la distance de la cible distante en mesurant une distance de référence, comprenant l'exécution des étapes suivantes :

   - une fourniture de l'appareil selon l'une quelconque des revendications 12 ou 13 avec des miroirs en tant qu'éléments réfléchissants ;

      A. un balayage desdits un ou plusieurs faisceaux laser sur ladite cible distante (T) ;
      B. une acquisition du temps de vol desdits un ou plusieurs faisceaux laser depuis ladite section de collimation ou focalisation jusqu'à ladite section de réception par l'intermédiaire d'une réflexion sur ladite cible distante (T) ;
      C. une orientation dudit quatrième miroir (16) dans la direction de ladite cible coopérative (BC) et une mesure de la distance entre ledit centre de cylindre et ladite cible coopérative (BC) ;
      D. une répétition des étapes A et C en réalisant un auto-étalonnage de l'appareil comme une fonction de la différence entre ladite distance mesurée dans l'étape C et la distance nominale entre ledit centre de cylindre et ladite cible coopérative (BC).

16. Procédé pour l'étalonnage de la réflectivité d'une cible distante, comprenant l'exécution des étapes suivantes :

   - une fourniture de l'appareil selon l'une quelconque des revendications 12 ou 13 avec des miroirs en tant qu'éléments réfléchissants ;

      A. un balayage desdits un ou plusieurs faisceaux laser sur ladite cible distante (T) ;

B. une acquisition de la réflectivité desdits un ou plusieurs faisceaux laser depuis ladite section de collimation ou focalisation jusqu'à ladite section de réception par l'intermédiaire d'une réflexion sur ladite cible distante (T) ;

C. une orientation dudit quatrième miroir (16) dans la direction de ladite cible coopérative (BC) et une mesure de la réflectivité de ladite cible coopérative (BC) ;

D. une répétition des étapes A et C en réalisant un auto-étalonnage de l'appareil comme une fonction de la différence entre ladite réflectivité mesurée dans l'étape C et une réflectivité nominale de ladite cible coopérative (BC).

**17.** Procédé d'acquisition d'un ou plusieurs profils de puissance optique d'un ou plusieurs faisceaux laser envoyés sur la cible distante (T), comprenant l'exécution des étapes suivantes :

- une fourniture de l'appareil selon la revendication 13 avec des miroirs en tant qu'éléments réfléchissants ;

A. un balayage desdits un ou plusieurs faisceaux laser sur ladite cible distante (T) ;

B. une acquisition de la réflectivité desdits un ou plusieurs faisceaux laser depuis ladite section de collimation ou focalisation jusqu'à ladite section de réception par l'intermédiaire d'une réflexion sur ladite cible distante (T) ;

C. une orientation dudit quatrième miroir (16) dans la direction desdites une ou plusieurs cibles coopératives supplémentaires (SR) afin de les balayer, et une mesure de la puissance optique desdites une ou plusieurs cibles coopératives supplémentaires (SR), acquérant ainsi lesdits un ou plusieurs profils ;

D. une répétition des étapes A à C en réalisant un auto-étalonnage de l'appareil comme une fonction de la différence entre lesdits un ou plusieurs profils et un ou plusieurs profils nominaux prédéterminés respectifs.

**18.** Procédé pour la correction d'erreurs systématiques lors de la focalisation d'un ou plusieurs faisceaux laser sur une cible distante (T), y compris l'exécution des étapes suivantes :

- une fourniture de l'appareil selon la revendication 13, dans lequel lesdites une ou plusieurs cibles coopératives supplémentaires (SR) sont une ou plusieurs bandes allongées le long d'une direction, d'une largeur h perpendiculaire à ladite direction ;

- un calcul d'une table de recherche qui fournit l'erreur de mesure du profil de puissance optique desdits un ou plusieurs faisceaux laser lorsqu'ils sont balayés sur lesdites une ou plusieurs cibles coopératives supplémentaires (SR), l'erreur étant calculée de manière théorique comme la différence entre une puissance optique nominale $I_x(X)$ et une bande allongée de largeur infinitésimale :

$$I_x(x) = I_1\, e^{-\frac{2x^2}{w_z^2}}$$

dans lequel $I_1 = I_0 \sqrt{\frac{\pi}{2}}\, w_z \mathrm{Erf}(2\sqrt{2}\, w_z)$ et $\mathrm{Erf}(z) = \frac{2}{\sqrt{\pi}} \int_0^z e^{-t^2}\, dt$ , dans laquelle $w_z$ représente le rayon de la section du faisceau lorsque l'intensité est réduite à $1/e^2$, et $x$ est la coordonnée du déplacement du faisceau laser, $I_0$ est la puissance de crête ;

et la puissance optique $I'_x(x1)$ calculée sur une bande de largeur finie $h$ :

$$I'_x(x1) = \int_{-\infty}^{\infty} H\left(x + \frac{h}{2}\right) H\left(x - \frac{h}{2}\right) I_1\, e^{-\frac{2(x1-x)^2}{w_z^2}}\, dx = \frac{1}{2} I_1 \sqrt{\frac{\pi}{2}}\, w_z \left(\mathrm{Erf}\left[\frac{h-2x1}{\sqrt{2}w_z}\right] + \mathrm{Erf}\left[\frac{h+2x1}{\sqrt{2}w_z}\right]\right) H[h]$$

dans lequel $H$ est la fonction de Heaviside, et $x1$ est de nouveau la coordonnée du déplacement du faisceau laser ;

- une exécution du procédé selon la revendication 17, obtenant lesdits un ou plusieurs profils mesurés ;

- un auto-étalonnage de la focalisation ou collimation desdits un ou plusieurs faisceaux laser sur ladite cible distante (T) comme une fonction desdits un ou plusieurs profils mesurés et de ladite table de recherche.

**19.** Procédé pour la correction d'erreurs d'alignement d'un ou plusieurs faisceaux laser envoyés sur une cible distante (T), incluant l'exécution des étapes suivantes :

- une fourniture de l'appareil selon la revendication 13, dans lequel ledit moteur avec fonction d'inclinaison est pourvu d'un codeur, et dans lequel lesdites une ou plusieurs cibles coopératives supplémentaires (SR) sont une ou plusieurs bandes allongées, qui sont allongées le long d'une direction présentant une largeur h perpendiculaire à ladite direction ;
- une exécution du procédé selon la revendication 17, obtenant au moins deux profils qui sont mesurés par rapport à au moins deux cibles coopératives supplémentaires respectives (SR) inclinées selon deux angles exactement opposés $\phi$, $-\phi$;
- une identification des coordonnées des pics desdits un ou plusieurs profils mesurés par ledit codeur ;
- un calcul de la différence d'alignement **dx, dy** le long de deux coordonnées respectives x et y sur la cible comme :

$$dx = \frac{1}{2}((xm1 + xm2) - (xa1 + xa2)) \qquad dy = \frac{1}{2}\big((xa2 - xa1) - (xm2 - xm1)\big) \, Tan[\frac{\pi}{2} - \phi]$$

dans laquelle **xm1** et **xm2** sont les coordonnées de deux pics des profils tels que mesurés en correspondance avec deux desdites au moins deux cibles coopératives supplémentaires (SR), et **x$\alpha$2, x$\alpha$1** sont les valeurs nominales de ces deux pics, les valeurs nominales étant prédéterminées dans des conditions d'alignement optimales ;
- un auto-étalonnage de l'alignement desdits un ou plusieurs faisceaux laser (A11Bs), du séparateur de faisceau (BS) et/ou du miroir (M) comme une fonction de ladite différence d'alignement **dx, dy**.

**20.** Procédé pour la correction de la focalisation d'un ou plusieurs faisceaux laser diffusés par une cible distante (T), comprenant l'exécution des étapes suivantes :

- une fourniture de l'appareil selon l'une quelconque des revendications 1 à 14, dans lequel, en dehors dudit faisceau (BR) de fibres d'imagerie ou de fibres multimodes GRIN ou de fibres multimodes à faible coefficient de dispersion modale, une pluralité de fibres multimodes individuelles, par exemple d'un diamètre de l'ordre de 30-100 microns, avec une position prédéterminée et des détecteurs correspondants (DET), sont fournies dans ledit module actif ;
- une acquisition, par lesdits détecteurs correspondants (DET), d'une pluralité de signaux (DEF) en provenance de ladite pluralité de fibres multimodes individuelles ;
- si au moins une de ladite pluralité de signaux (DEF) se situe au-dessus d'un seuil prédéterminé, un déplacement (TRIC) de ladite section de collecte (LRIC) pour minimiser ledit au moins un signal.

Fig. 1

Fig. 2

Fig. 3

Fig. 4

Fig. 5

Fig. 6

Fig. 7

Electro-optic scheme
Passive module MP

Fig. 8

Receiving bundle

Buffer/jacket of the new fiber

Focus control single fibers

Fig. 9

**Fig. 10**

**Fig. 11**

## Fig. 12

## Fig. 13

Fig. 14

Fig. 15

Fig. 16

Fig. 17

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000206243 B
- WO 2014056476 A
- EP 2620745 A1
- IT 1343719

### Non-patent literature cited in the description

- **D. NITZAN et al.** The measurement and use of registered reflectance and range in date scene analysis. *Proc. Of the IEEE,* 1977, vol. 65 (2), 206-220
- **WHITFORD, AE.** Journal: The Construction of Large Telescopes, from Symposium Proceedings. Academic Press, 05 April 1965, 42-44